# EUROPEAN PATENT APPLICATION

(11) **EP 4 651 617 A1**
(43) Date of publication of application: **19.11.2025**
(21) Application number: 24799845.3
(22) Date of filing: 26.03.2024
(51) Int. Cl.: H04W 74/08, H04W 56/00

(54) **CHANNEL TRANSMISSION METHOD, COMMUNICATION DEVICE AND STORAGE MEDIUM**

(30) Priority: 04.05.2023 CN 202310492512
(71) Applicant: ZTE Corporation, Shenzhen, Guangdong 518057 (CN)
(72) Inventor: DAI, Bo, Shenzhen, Guangdong 518057 (CN); YU, Guanghui, Shenzhen, Guangdong 518057 (CN); HU, Liujun, Shenzhen, Guangdong 518057 (CN)
(74) Representative: Aipex B.V.
(86) International application number: PCT/CN2024/083820
(87) International publication number: WO 2024/227387

(57) **Abstract**

Provided are a channel transmission method, a communication device, and a storage medium. A channel transmission method applied to a terminal device includes receiving a synchronization signal and a physical broadcast channel sent by a base station, where the synchronization signal and the physical broadcast channel are transmitted in at least one of the following manners: transmitting the synchronization signal and the physical broadcast channel on a collectively occupied time domain resource in a first slot, and transmitting the synchronization signal or the physical broadcast channel on a separately occupied time domain resource in a second slot; or transmitting the synchronization signal and the physical broadcast channel on a first collectively occupied time domain resource in a first slot, and transmitting the synchronization signal and the physical broadcast channel on a second collectively occupied time domain resource in a second slot, where the first collectively occupied time domain resource and the second collectively occupied time domain resource are different time domain resources, and the first slot and the second slot are different slots; and accessing a network based on the synchronization signal and/or the physical broadcast channel.

## Description

### TECHNICAL FIELD

The present application relates to the field of communication technology, for example, a channel transmission method, a communication device, and a storage medium.

### BACKGROUND

Mobile communication has continued to follow the development pattern of a new generation of technology every decade, having gone through the evolution of 1G, 2G, 3G, 4G, and 5G. Every generational leap and every technological advancement have significantly promoted industrial upgrades and socio-economic development. The evolution from 1G to 2G marks the transition from analog communication to digital communication and enables mobile communication to enter thousands of households. The evolution from 2G to 3G, 4G, and 5G marks the transformation from voice services to data services, increases a transmission rate hundreds of times, and promotes the popularization and prosperity of mobile Internet applications. With the rapid development of the mobile Internet and the emerging of new services, new businesses, new technologies, and new devices, 5G mobile communication systems have difficulty in satisfying flexible and diverse traffic requirements in the future, and the next-generation mobile communication system needs to be developed urgently.

6G is short for the sixth generation of mobile communication standards, which is a conceptual wireless network mobile communication technology and also referred to as the sixth-generation mobile communication technology. The design of the 6G system is currently in a stage of soliciting candidate technologies, and no detailed design plan has been developed for the 6G system. As a brand-new system, the 6G system urgently requires studies on and a solution to how to design better transmissions of a synchronization signal and a physical broadcast channel.

### SUMMARY

The present application provides a channel transmission method, a communication device, and a storage medium.

An embodiment of the present application provides a channel transmission method applied to a terminal. The method includes the following:
A synchronization signal and a physical broadcast channel sent by a base station are received, where the synchronization signal and the physical broadcast channel are transmitted in at least one of the following manners: transmitting the synchronization signal and the physical broadcast channel on a collectively occupied time domain resource in a first slot, and transmitting the synchronization signal or the physical broadcast channel on a separately occupied time domain resource in a second slot; or transmitting the synchronization signal and the physical broadcast channel on a first collectively occupied time domain resource in the first slot, and transmitting the synchronization signal and the physical broadcast channel on the second collectively occupied time domain resource in a second slot, where the first collectively occupied time domain resource and the second collectively occupied time domain resource are different time domain resources, and the first slot and the second slot are different slots.

A network is accessed based on the synchronization signal and/or the physical broadcast channel.

An embodiment of the present application provides a channel transmission method applied to a base station. The method includes the following:
A synchronization signal and a physical broadcast channel are sent to a terminal to enable the terminal to access a network based on the synchronization signal and/or the physical broadcast channel.

The synchronization signal and the physical broadcast channel are transmitted in at least one of the following manners: transmitting the synchronization signal and the physical broadcast channel on a collectively occupied time domain resource in a first slot, and transmitting the synchronization signal or the physical broadcast channel on a separately occupied time domain resource in a second slot; or transmitting the synchronization signal and the physical broadcast channel on a first collectively occupied time domain resource in the first slot, and transmitting the synchronization signal and the physical broadcast channel on a second collectively occupied time domain resource in the second slot, where the first collectively occupied time domain resource and the second collectively occupied time domain resource are different time domain resources, and the first slot and the second slot are different slots.

An embodiment of the present application provides a communication device. The communication device includes a memory and at least one processor.

The memory is configured to store at least one program.

The at least one program, when executed by the at least one processor, causes the at least one processor to perform the channel transmission method of any preceding embodiment.

An embodiment of the present application provides a storage medium having a computer program stored thereon, where the computer program, when executed by a processor, causes the processor to perform the channel transmission method of any preceding embodiment.

### BRIEF DESCRIPTION OF DRAWINGS

FIG. 1 is a diagram of a time-frequency structure of a synchronization signal/physical broadcast channel block (SSB) in the related art.
FIG. 2 is a flowchart of a channel transmission method according to an embodiment of the present application.
FIG. 3 is a schematic diagram of a first association relationship between a primary synchronization signal, a secondary synchronization signal, and a physical broadcast channel according to an embodiment of the present application.
FIG. 4 is a schematic diagram of a second association relationship between a primary synchronization signal, a secondary synchronization signal, and a physical broadcast channel according to an embodiment of the present application.
FIG. 5 is a schematic diagram of a third association relationship between a primary synchronization signal, a secondary synchronization signal, and a physical broadcast channel according to an embodiment of the present application.
FIG. 6 is a schematic diagram of a fourth association relationship between a primary synchronization signal, a secondary synchronization signal, and a physical broadcast channel according to an embodiment of the present application.
FIG. 7 is a schematic diagram of a fifth association relationship between a primary synchronization signal, a secondary synchronization signal, and a physical broadcast channel according to an embodiment of the present application.
FIG. 8 is a schematic diagram of transmissions indicated by an indication signal according to an embodiment of the present application.
FIG. 9 is a structural diagram of a physical broadcast channel according to an embodiment of the present application.
FIG. 10 is a schematic diagram of transmissions of a physical broadcast channel and a synchronization signal on time domain symbols according to an embodiment of the present application.
FIG. 11 is another structural diagram of a physical broadcast channel according to an embodiment of the present application.
FIG. 12 is a schematic diagram of transmissions of a physical broadcast channel, a secondary synchronization signal, and a primary synchronization signal according to an embodiment of the present application.
FIG. 13 is another schematic diagram of transmissions of a physical broadcast channel, a secondary synchronization signal, and a primary synchronization signal according to an embodiment of the present application.
FIG. 14 is a flowchart of another channel transmission method according to an embodiment of the present application.
FIG. 15 is a structural diagram of a channel transmission apparatus according to an embodiment of the present application.
FIG. 16 is a structural diagram of a channel transmission apparatus according to an embodiment of the present application.
FIG. 17 is a structural diagram of a communication device according to an embodiment of the present application.

### DETAILED DESCRIPTION

To make the objects, technical solutions, and advantages of the present application more apparent, embodiments of the present application are described hereinafter in detail in conjunction with drawings. It is to be noted that if not in collision, the embodiments of the present application and features therein may be combined with each other in any manner.

The steps illustrated in the flowcharts among the drawings may be performed by, for example, a computer system capable of executing a set of computer-executable instructions. Moreover, although logical sequences are illustrated in the flowcharts, in some cases, the steps illustrated or described may be performed in sequences different from those described herein.

In a 5G system, a terminal performs cell search based on an SSB. The SSB is transmitted repeatedly to implement narrow beam polling, thereby achieving the coverage of an entire cell. After being turned on, the terminal obtains an optimal beam by scanning the SSB on each narrow beam, completes the cell search, and accesses a network.

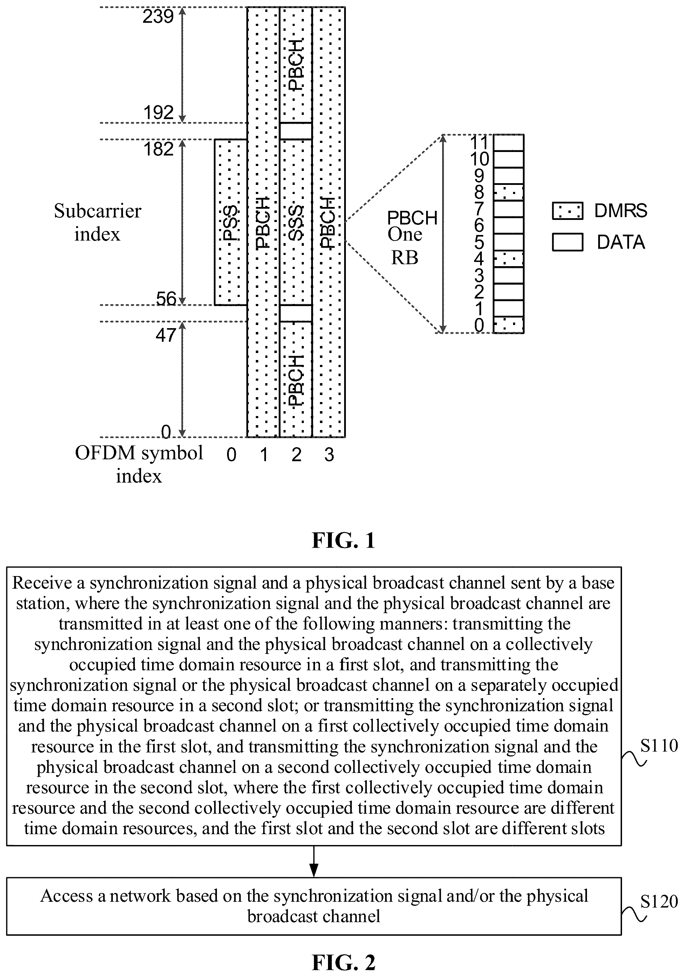

In the 5G system, the SSB has a time-frequency structure shown in FIG. 1. FIG. 1 is a diagram of a time-frequency structure of an SSB in the related art. The SSB includes a primary synchronization signal (PSS), a secondary synchronization signal (SSS), a physical broadcast channel block (PBCH), and a demodulation reference signal (DMRS) thereof. The SSB occupies four consecutive orthogonal frequency-division multiplexing (OFDM) symbols in time domain and occupies 240 consecutive subcarriers in frequency domain. Assuming that indexes of the OFDM symbols are 0 to 3 and indexes of the subcarriers are 0 to 239, the PSS, the SSS, the PBCH, and the DMRS thereof in the SSB specifically occupy the following resources:
The PSS is located on symbol 0 and occupies subcarriers 56 to 182, 127 subcarriers in total.

The SSS is located on symbol 2 and occupies subcarriers 56 to 182, 127 subcarriers in total.

The PBCH includes a PBCH DMRS and PBCH data, and the PBCH is located on symbols 1, 2, and 3.

On symbol 1, the PBCH occupies subcarriers 0 to 239, 240 subcarriers in total. On symbol 2, the PBCH occupies subcarriers 0 to 47 and subcarriers 192 to 239, 96 subcarriers in total. On symbol 3, the PBCH occupies subcarriers 0 to 239, 240 subcarriers in total.

The DMRS is located in the PBCH and has a frequency domain density of 1/4, that is, one DMRS exists in every four PBCH resource elements (REs).

To satisfy a measurement requirement of a high-speed mobile terminal, the synchronization signal needs to be transmitted at a high density. However, a system message carried in the physical broadcast channel generally changes with a relatively long period. Since the SSB is transmitted as a whole, the physical broadcast channel is transmitted along with the synchronization signal, resulting in an unnecessary waste of resources, limiting a dynamic time domain shutdown operation of the network, increasing the power consumption of the network, which is not conducive to network energy saving. Therefore, a manner in which the synchronization signal and the physical broadcast channel are transmitted with the same period is no longer applicable to a 6G system, and a new method for transmitting the synchronization signal and the physical broadcast channel needs to be designed to more flexibly use resources, avoid a waste of resources, and achieve more flexible time domain shutdown of the network and the network energy saving.

In a 4G system, the primary and secondary synchronization signals have a fixed period of 5 ms, and their positions are also fixed, located on the last two time domain symbols in a first slot, where each symbol has the same frequency domain bandwidth. The PBCH has a fixed period of 10 ms and is located on the first four time domain symbols in a second slot, where each symbol has the same frequency domain bandwidth. The primary and secondary synchronization signals and the PBCH in the 4G system have the problem of fixed periods and fixed positions, resulting in a waste of network resources and a failure to achieve flexible time domain shutdown of a network and network energy saving.

In an embodiment, FIG. 2 is a flowchart of a channel transmission method according to an embodiment of the present application. As shown in FIG. 2, the method of this embodiment may be applied to a terminal device. For example, the terminal device may be a user equipment (UE). As shown in FIG. 2, this embodiment includes S110 and S120.

In S110, a synchronization signal and a physical broadcast channel sent by a base station are received.

The synchronization signal and the physical broadcast channel are transmitted in the following manners: transmitting the synchronization signal and the physical broadcast channel on a collectively occupied time domain resource in a first slot, and transmitting the synchronization signal or the physical broadcast channel on a separately occupied time domain resource in a second slot; and/or transmitting the synchronization signal and the physical broadcast channel on a first collectively occupied time domain resource in a first slot, and transmitting the synchronization signal and the physical broadcast channel on a second collectively occupied time domain resource in a second slot, where the first collectively occupied time domain resource and the second collectively occupied time domain resource are different time domain resources, and the first slot and the second slot are different slots.

In this embodiment, the synchronization signal may include a primary synchronization signal and/or a secondary synchronization signal, the physical broadcast channel and the synchronization signal may be simultaneously transmitted in multiple slots, and the base station may transmit the synchronization signal and the physical broadcast channel to the terminal device in any one of the manners below.

In manner one, the synchronization signal and the physical broadcast channel are transmitted on the collectively occupied time domain resource in the first slot, and the synchronization signal is transmitted on the separately occupied time domain resource in the second slot.

The first slot and the second slot are named to distinguish between different slots, the first slot may include at least one slot, and the second slot may include at least one slot. In some slots, the synchronization signal and the physical broadcast channel are transmitted on collectively occupied time domain resources, and in some other slots, the synchronization signal is transmitted on separately occupied time domain resources.

In manner two, the synchronization signal and the physical broadcast channel are transmitted on the collectively occupied time domain resource in the first slot, the synchronization signal is transmitted on the separately occupied time domain resource in the second slot, and the physical broadcast channel is transmitted on the separately occupied time domain resource in a third slot.

The first slot, the second slot, and the third slot are named to distinguish between different slots, and the first slot, the second slot, and the third slot may each include at least one slot. In some slots, the synchronization signal and the physical broadcast channel may be transmitted on collectively occupied time domain resources, in some other slots, the synchronization signal may be transmitted on separately occupied time domain resources, and in some other slots, the physical broadcast channel may be transmitted on separately occupied time domain resources.

In the above two manners, the time domain resources may include multiple different time domain resources. On some time domain resources, the physical broadcast channel and the synchronization signal may collectively occupy consecutive time domain symbols for transmission. On some other time domain resources, the physical broadcast channel or the synchronization signal may separately occupy consecutive time domain symbols for transmission, the synchronization signal may separately occupy consecutive time domain symbols for transmission, or the synchronization signal may separately occupy inconsecutive time domain symbols for transmission.

In manner three, the synchronization signal and the physical broadcast channel are transmitted on the first collectively occupied time domain resource in the first slot, and the synchronization signal and the physical broadcast channel are transmitted on the second collectively occupied time domain resource in the second slot.

The first collectively occupied time domain resource and the second collectively occupied time domain resource are named to distinguish between different time domain resources. A first occupied time domain resource and a second occupied time domain resource may be understood as time domain resources collectively occupied by the physical broadcast channel and the synchronization signal.

In manner four, the primary synchronization signal, the secondary synchronization signal, and the physical broadcast channel are transmitted on the collectively occupied time domain resource in the first slot, the secondary synchronization signal and the primary synchronization signal are transmitted on the collectively occupied time domain resource in the second slot, and the primary synchronization signal or the secondary synchronization signal is transmitted on the separately occupied time domain resource in the third slot.

In manner five, the primary synchronization signal, the secondary synchronization signal, and the physical broadcast channel are transmitted on the collectively occupied time domain resource in the first slot, the secondary synchronization signal is transmitted on the separately occupied time domain resource in the second slot, and the primary synchronization signal is transmitted on the separately occupied time domain resource in the third slot.

In manner six, the primary synchronization signal, the secondary synchronization signal, and the physical broadcast channel are transmitted on the collectively occupied time domain resource in the first slot, the secondary synchronization signal and the physical broadcast channel are transmitted on the collectively occupied time domain resource in the second slot, and the primary synchronization signal or the secondary synchronization signal is transmitted on the separately occupied time domain resource in the third slot.

In manner seven, the primary synchronization signal, the secondary synchronization signal, and the physical broadcast channel are transmitted on the collectively occupied time domain resource in the first slot, the secondary synchronization signal and the physical broadcast channel are transmitted on the collectively occupied time domain resource in the second slot, and the secondary synchronization signal and the primary synchronization signal are transmitted on the collectively occupied time domain resource in the third slot.

In manner eight, the secondary synchronization signal and the physical broadcast channel are transmitted on the collectively occupied time domain resource in the first slot, and the secondary synchronization signal and the primary synchronization signal are transmitted on the collectively occupied time domain resource in the second slot.

In manner nine, manner three may be used in combination with another manner. For example, manner three is combined with manner one: the synchronization signal and the physical broadcast channel are transmitted on the first collectively occupied time domain resource in the first slot, the synchronization signal and the physical broadcast channel are transmitted on the second collectively occupied time domain resource in the second slot, and the synchronization signal is transmitted on the separately occupied time domain resource in the third slot. Alternatively, manner three is combined with manner four: the synchronization signal and the physical broadcast channel are transmitted on the first collectively occupied time domain resource in the first slot, the synchronization signal and the physical broadcast channel are transmitted on the second collectively occupied time domain resource in the second slot, the primary synchronization signal and the secondary synchronization signal are transmitted on the collectively occupied time domain resource in the third slot (no physical broadcast channel is transmitted in the third slot), and the primary synchronization signal is transmitted on the separately occupied time domain resource in a fourth slot (no physical broadcast channel and no secondary synchronization signal are transmitted in the fourth slot).

In this embodiment, the first collectively occupied time domain resource and the second collectively occupied time domain resource have at least one of the following differences: cyclic prefixes have different lengths, a paging prefix of the first collectively occupied time domain resource has a first length, such as a short cyclic prefix (CP), and a paging prefix of the second collectively occupied time domain resource has a second length, such as a long CP, where the length of the long CP is greater than the length of the short CP; different synchronization sequences are transmitted on the occupied time domain resources; the occupied time domain resources have different lengths; occupied bandwidths are different; relative position relationships are different; or occupied subcarrier spacings are different. Different relative position relationships mean that a relative position relationship between the synchronization signal and the physical broadcast channel on the first collectively occupied time domain resource is different from a relative position relationship between the synchronization signal and the physical broadcast channel on the second collectively occupied time domain resource. For example, on the first collectively occupied time domain resource, the synchronization signal is located before the physical broadcast channel; and on the second collectively occupied time domain resource, the synchronization signal is located after the physical broadcast channel.

In S120, a network is accessed based on the synchronization signal and/or the physical broadcast channel.

In this embodiment, the existence or not of the synchronization signal and/or the physical broadcast channel corresponding to the second collectively occupied time domain resource is indicated by first synchronization indication information, and the first synchronization indication information may be transmitted on the physical broadcast channel corresponding to the first collectively occupied time domain resource or transmitted in a system information block (SIB). The SIB includes a period of the second collectively occupied time domain resource and a position of the second collectively occupied time domain resource in the slot.

In this embodiment, after receiving the synchronization signal and the physical broadcast channel, the terminal device may access a 6G network according to the synchronization signal and the physical broadcast channel, select an access resource according to the synchronization signal to access the 6G network, or determine whether to access the 6G network according to information carried in the physical broadcast channel.

When the synchronization signal and/or the physical broadcast channel corresponding to the second collectively occupied time domain resource are transmitted, the terminal determines the access resource and accesses the network according to the synchronization signal and the physical broadcast channel corresponding to the first collectively occupied time domain resource and the synchronization signal and/or the physical broadcast channel corresponding to the second collectively occupied time domain resource.

The synchronization signal and the physical broadcast channel corresponding to the first collectively occupied time domain resource and the synchronization signal and/or the physical broadcast channel corresponding to the second collectively occupied time domain resource are transmitted in the same bandwidth part or in different bandwidth parts.

A manner for accessing the network is not specifically limited in this embodiment.

In this embodiment, the synchronization signal and the physical broadcast channel are transmitted in different transmission manners, and in some slots, the physical broadcast channel or the synchronization signal may be transmitted on the separately occupied time domain resource, solving the problems of power consumption of a network and a waste of resources due to limitations of joint transmissions of the synchronization signal and the physical broadcast channel.

In an embodiment, the synchronization signal includes the primary synchronization signal and the secondary synchronization signal, and accordingly, transmitting the synchronization signal and the physical broadcast channel on the collectively occupied time domain resource in the first slot, and transmitting the synchronization signal or the physical broadcast channel on the separately occupied time domain resource in the second slot includes one of the manners below.

The primary synchronization signal, the secondary synchronization signal, and the physical broadcast channel are transmitted on the collectively occupied time domain resource in the first slot, and the primary synchronization signal or the secondary synchronization signal is transmitted on the separately occupied time domain resource in the second slot.

The primary synchronization signal, the secondary synchronization signal, and the physical broadcast channel are transmitted on the collectively occupied time domain resource in the first slot, and the primary synchronization signal and the secondary synchronization signal are transmitted on the collectively occupied time domain resource in the second slot.

The secondary synchronization signal and the physical broadcast channel are transmitted on the collectively occupied time domain resource in the first slot, and the secondary synchronization signal and the primary synchronization signal are transmitted on the collectively occupied time domain resource in the second slot.

The synchronization signal and the physical broadcast channel are transmitted on the collectively occupied time domain resource in the first slot, the synchronization signal is transmitted on the separately occupied time domain resource in the second slot, and the physical broadcast channel is transmitted on the separately occupied time domain resource in the third slot.

The primary synchronization signal, the secondary synchronization signal, and the physical broadcast channel are transmitted on the collectively occupied time domain resource in the first slot, the primary synchronization signal or the secondary synchronization signal is transmitted on the separately occupied time domain resource in the second slot, and the secondary synchronization signal and the primary synchronization signal are transmitted on the collectively occupied time domain resource in the third slot.

The primary synchronization signal, the secondary synchronization signal, and the physical broadcast channel are transmitted on the collectively occupied time domain resource in the first slot, the secondary synchronization signal is transmitted on the separately occupied time domain resource in the second slot, and the primary synchronization signal is transmitted on the separately occupied time domain resource in the third slot.

The primary synchronization signal, the secondary synchronization signal, and the physical broadcast channel are transmitted on the collectively occupied time domain resource in the first slot, the primary synchronization signal or the secondary synchronization signal is transmitted on the separately occupied time domain resource in the second slot, and the secondary synchronization signal and the physical broadcast channel are transmitted on the collectively occupied time domain resource in the third slot.

The primary synchronization signal, the secondary synchronization signal, and the physical broadcast channel are transmitted on the collectively occupied time domain resource in the first slot, the secondary synchronization signal and the primary synchronization signal are transmitted on the collectively occupied time domain resource in the second slot, and the secondary synchronization signal and the physical broadcast channel are transmitted on the collectively occupied time domain resource in the third slot.

In an embodiment, the synchronization signal and the physical broadcast channel are transmitted periodically.

The synchronization signal includes the PSS and the SSS.

In this embodiment, the primary synchronization signal, the secondary synchronization signal, and the physical broadcast channel may have the same period or different periods; the periods of the primary synchronization signal, the secondary synchronization signal, and the physical broadcast channel may have multiple options; and the periods of the primary synchronization signal, the secondary synchronization signal, and the physical broadcast channel may be configured in an SIB.

In an embodiment, a transmission period of the synchronization signal and a transmission period of the physical broadcast channel have at least one of the relationships below.

The transmission period of the physical broadcast channel is greater than or equal to the transmission period of the synchronization signal.

The transmission period of the physical broadcast channel is greater than a transmission period of the secondary synchronization signal, and the transmission period of the secondary synchronization signal is greater than a transmission period of the primary synchronization signal.

The transmission period of the physical broadcast channel is the same as a transmission period of the secondary synchronization signal, and a transmission period of the primary synchronization signal is greater than the transmission period of the physical broadcast channel.

The transmission period of the physical broadcast channel is the same as the transmission period of the synchronization signal.

In this embodiment, the transmission period of the physical broadcast channel may be greater than or equal to the transmission period of the synchronization signal. For example, the period of the PBCH is 4 times, 8 times, or 16 times the period of the synchronization signal. The transmission period of the physical broadcast channel may be freely selected, for example, the transmission period of the PBCH may be 10 ms, 20 ms, 40 ms, 80 ms, 160 ms, 320 ms, 640 ms, or the like. The period of the synchronization signal may have multiple options, such as 5 ms, 10 ms, 20 ms, 40 ms, 80 ms, 160 ms, 320 ms, or the like.

A specific setting is as follows: the period of the PBCH is 20 ms and the period of the synchronization signal (PSS/SSS) is 5 ms; the period of the PBCH is 40 ms and the period of the synchronization signal (PSS/SSS) is 10 ms; the period of the PBCH is 80 ms and the period of the synchronization signal (PSS/SSS) is 20 ms; or the period of the PBCH is 160 ms or 320 ms and the period of the synchronization signal (PSS/SSS) is 20 ms.

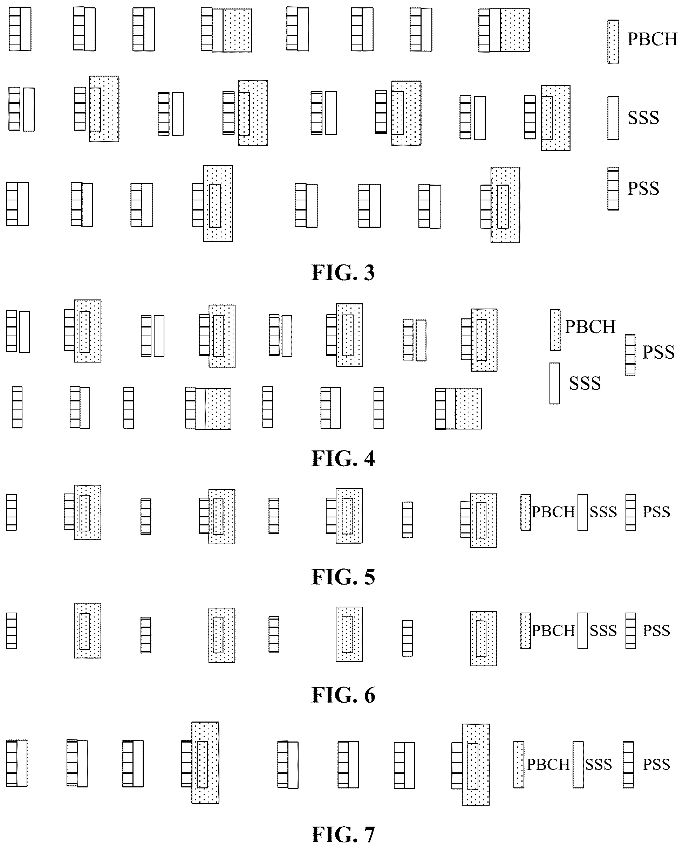

When the physical broadcast channel is transmitted, the physical broadcast channel and the synchronization signal are transmitted on consecutive time domain symbols, or a predefined interval of time domain symbols exists between the PBCH and the synchronization signal. The transmission period of the physical broadcast channel and the transmission period of the secondary synchronization signal may be configured in the SIB, multiple synchronization signals are associated with one physical broadcast channel, and the PSS, SSS, and PBCH with an association relationship have the same beam index. FIG. 3 is a schematic diagram of a first association relationship between a primary synchronization signal, a secondary synchronization signal, and a physical broadcast channel according to an embodiment of the present application.

In this embodiment, the physical broadcast channel, the primary synchronization signal, and the secondary synchronization signal have different transmission periods. The transmission period of the PBCH is greater than the transmission period of the SSS, and the transmission period of the SSS is greater than the transmission period of the PSS. For example, the transmission period of the PSS is 5 ms, the transmission period of the SSS is 10 ms, and the transmission period of the PBCH is 20 ms; the transmission period of the PSS is 5 ms, the transmission period of the SSS is 20 ms, and the transmission period of the PBCH is 40 ms; the transmission period of the PSS is 10 ms, the transmission period of the SSS is 20 ms, and the transmission period of the PBCH is 40 ms; the transmission period of the PSS is 10 ms, the transmission period of the SSS is 40 ms, and the transmission period of the PBCH is 160 ms or 320 ms; or the transmission period of the PSS is 10 ms, the transmission period of the SSS is 20 ms, and the transmission period of the PBCH is 160 ms or 320 ms. The transmission period of the PBCH may have multiple options, such as 10 ms, 20 ms, 40 ms, 80 ms, 160 ms, and 320 ms; the transmission period of the PSS may have multiple options, such as 5 ms, 10 ms, 20 ms, 40 ms, 80 ms, 160 ms, and 320 ms; and the transmission period of the SSS may have multiple options, such as 5 ms, 10 ms, 20 ms, 40 ms, 80 ms, 160 ms, and 320 ms.

When the physical broadcast channel is transmitted, the physical broadcast channel and the synchronization signal are transmitted on consecutive time domain symbols, or a predefined interval of time domain symbols exists between the physical broadcast channel and the synchronization signal. The period of the physical broadcast channel and the period of the secondary synchronization signal may be configured in the SIB; multiple primary synchronization signals are associated with one secondary synchronization signal, multiple secondary synchronization signals are associated with one physical broadcast channel, and the physical broadcast channel, the primary synchronization signals, and the secondary synchronization signals with an association relationship correspond to the same beam index. When the physical broadcast channel is transmitted, the physical broadcast channel, the primary synchronization signal, and the secondary synchronization signal are transmitted on adjacent time domain symbols, or the predefined interval of time domain symbols exists between the physical broadcast channel, the primary synchronization signal, and the secondary synchronization signal. When the secondary synchronization signal is transmitted, the secondary synchronization signal and the primary synchronization signal are transmitted on consecutive time domain symbols or the predefined interval of time domain symbols exists between the secondary synchronization signal and the primary synchronization signal. FIG. 4 is a schematic diagram of a second association relationship between a primary synchronization signal, a secondary synchronization signal, and a physical broadcast channel according to an embodiment of the present application.

In this embodiment, the physical broadcast channel and the secondary synchronization signal have the same transmission period, and the transmission period of the physical broadcast channel is greater than the transmission period of the primary synchronization signal. For example, the transmission period of the PSS is 5 ms, the transmission period of the SSS is 10 ms or 20 ms, and the transmission period of the PBCH is 10 ms or 20 ms; the transmission period of the PSS is 10 ms, the transmission period of the SSS is 40 ms, and the transmission period of the PBCH is 40 ms; or the transmission period of the PSS is 20 ms, the transmission period of the SSS is 80 ms, and the transmission period of the PBCH is 80 ms. The transmission period of the PBCH and the SSS may have multiple options, such as 10 ms, 20 ms, 40 ms, 80 ms, 160 ms, and 320 ms; and the transmission period of the PSS may have multiple options, such as 5 ms, 10 ms, 20 ms, 40 ms, 80 ms, 160 ms, and 320 ms.

The transmission periods of the physical broadcast channel, the secondary synchronization signal, and the primary synchronization signal may be configured in the SIB; multiple primary synchronization signals may be associated with one secondary synchronization signal or physical broadcast channel, and the physical broadcast channel, the secondary synchronization signal, and the primary synchronization signals with an association relationship have the same beam index. The physical broadcast channel and the secondary synchronization signal may be transmitted on consecutive time domain symbols, or the primary synchronization signal and the secondary synchronization signal may be transmitted on inconsecutive time domain symbols with the predefined interval of time domain symbols; or the physical broadcast channel, the primary synchronization signal, and the secondary synchronization signal are transmitted on adjacent time domain symbols, or the predefined interval of time domain symbols exists between the broadcast channel, the primary synchronization signal, and the secondary synchronization signal. FIG. 5 is a schematic diagram of a third association relationship between a primary synchronization signal, a secondary synchronization signal, and a physical broadcast channel according to an embodiment of the present application.

In this embodiment, the primary synchronization signal, the secondary synchronization signal, and the physical broadcast channel have the same transmission period, the secondary synchronization signal and the physical broadcast channel are located on consecutive time domain symbols, the secondary synchronization signal may or may not overlap the physical broadcast channel in time domain, and the primary synchronization signal is located in a different slot from the secondary synchronization signal or the physical broadcast channel. FIG. 6 is a schematic diagram of a fourth association relationship between a primary synchronization signal, a secondary synchronization signal, and a physical broadcast channel according to an embodiment of the present application.

In a carrier aggregation scenario, the secondary synchronization signal may only be transmitted on some carriers, and the primary synchronization signal, the secondary synchronization signal, and the physical broadcast channel may be transmitted on some carriers; or the primary synchronization signal and the secondary synchronization signal may only be transmitted on some carriers, and the primary synchronization signal, the secondary synchronization signal, and the physical broadcast channel may be transmitted on some carriers.

The transmission manners in this embodiment break a binding transmission relationship between the primary synchronization signal, the secondary synchronization signal, and the physical broadcast channel so that the transmission period of the physical broadcast channel can be greater than the transmission periods of the primary synchronization signal and the secondary synchronization signal, and the transmission periods can be freely selected, achieving network energy saving.

In an embodiment, whether a signal transmission and/or a channel transmission exist is determined in at least one of the manners below.

Whether the synchronization signal and the physical broadcast channel are transmitted is determined in a blind detection manner.

Whether the physical broadcast channel is transmitted is indicated through the primary synchronization signal and/or the secondary synchronization signal.

In this embodiment, when the primary synchronization signal, the secondary synchronization signal, and the physical broadcast channel have different periods, one manner is that a terminal determines whether the primary synchronization signal, the secondary synchronization signal, and the physical broadcast channel exist in the blind detection manner, and the other manner is to indicate whether the physical broadcast channel is transmitted through the primary synchronization signal and/or the secondary synchronization signal.

In an embodiment, whether the transmission of the physical broadcast channel exists is determined in at least one of the manners below.

Whether the transmission of the physical broadcast channel exists is determined according to the number of time domain intervals between the primary synchronization signal and the secondary synchronization signal.

Whether the transmission of the physical broadcast channel exists is determined according to a precedence relationship between the primary synchronization signal and the secondary synchronization signal.

Whether the transmission of the physical broadcast channel exists is determined according to a sequence number of the secondary synchronization signal.

In this embodiment, whether the transmission of the PBCH exists is determined according to the number of time domain intervals between the PSS and the SSS. For example, when the number of time domain intervals between the PSS and the SSS is 0, no PBCH is transmitted, and when the number of time domain intervals between the PSS and the SSS is not 0, the PBCH is transmitted; when the number of time domain intervals between the PSS and the SSS is 0, the PBCH is transmitted, and when the number of time domain intervals between the PSS and the SSS is not 0, no PBCH is transmitted; or when the number of time domain intervals between the PSS and the SSS is t1, no PBCH is transmitted, and when the number of time domain intervals between the PSS and the SSS is t2, the PBCH is transmitted, where t1 and t2 are not equal. FIG. 7 is a schematic diagram of a fifth association relationship between a primary synchronization signal, a secondary synchronization signal, and a physical broadcast channel according to an embodiment of the present application.

In this embodiment, whether the transmission of the PBCH exists is determined according to the precedence relationship between the PSS and the SSS. For example, when the PSS is transmitted before the SSS, no PBCH is transmitted, and when the PSS is transmitted after the SSS, the PBCH is transmitted; or when the PSS is transmitted before the SSS, the PBCH is transmitted, and when the PSS is transmitted after the SSS, no PBCH is transmitted.

In this embodiment, whether the transmission of the PBCH exists is determined according to a sequence of the SSS. For example, when the SSS is transmitted using sequence 1, no PBCH is transmitted, and when the SSS is transmitted using sequence 2, the PBCH is transmitted. Sequence 1 and sequence 2 may correspond to different sequences with the same length, different sequence sets with the same length, different sequences with different lengths, or different sequence sets with different lengths.

In an embodiment, whether the transmissions of the synchronization signal and the physical broadcast channel exist is determined in at least one of the manners below.

Whether the transmissions of the secondary synchronization signal and/or the physical broadcast channel exist is determined according to a sequence number of the primary synchronization signal.

Whether the transmissions of the secondary synchronization signal and/or the primary synchronization signal and/or the physical broadcast channel exist is indicated through a dedicated indication signal.

In this embodiment, whether the transmissions of the SSS and/or the PBCH exist is determined according to a sequence of the PSS. For example, when the PSS is transmitted using sequence 3, no SSS and/or no PBCH are transmitted, and when the PSS uses sequence 4, the SSS and/or the PBCH are transmitted. Sequence 3 and sequence 4 may correspond to different sequences with the same length, different sequence sets with the same length, different sequences with different lengths, or different sequence sets with different lengths.

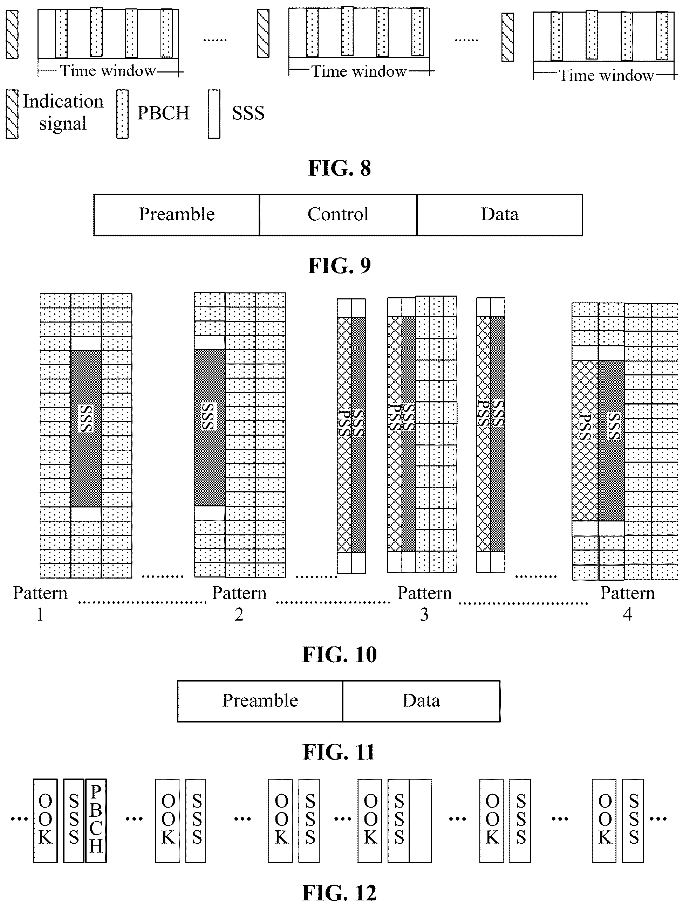

In this embodiment, whether the PBCH is transmitted and/or whether the SSS is transmitted and/or whether the PSS is transmitted are indicated through the dedicated indication signal. For example, if the dedicated indication signal is detected, the PBCH is transmitted and/or the SSS is transmitted and/or the PSS is transmitted, and if no dedicated indication signal is detected, no PBCH is transmitted and/or no SSS is transmitted and/or no PSS is transmitted. The dedicated indication signal is transmitted in an on-off keying (OOK) manner and corresponds to a particular sequence composed of 0 and 1, where the sequence has a fixed length. Alternatively, whether the dedicated indication signal is enabled and a frequency domain position and/or sequence information of the dedicated indication signal are configured in an SIB. FIG. 8 is a schematic diagram of transmissions indicated by an indication signal according to an embodiment of the present application.

The dedicated indication signal may be located before a time window in FIG. 8 or at a front end of the time window, where a period and a time domain position of the time window are configured in an SIB, and the dedicated indication signal is used for indicating transmission situations of the physical broadcast channel and/or the synchronization signal within the time window. The indication information is carried in the sequence corresponding to the dedicated indication signal and/or the indication information is indicated according to whether the dedicated indication signal exists.

The dedicated indication signal may be the synchronization signal or a signal generated by another sequence.

In an embodiment, the number of time domain symbols occupied by the physical broadcast channel is determined in at least one of the manners below.

The number of time domain symbols occupied by the physical broadcast channel is determined according to the length of a cyclic prefix corresponding to the physical broadcast channel.

The number of time domain symbols occupied by the physical broadcast channel is determined according to a type of a cyclic prefix corresponding to the physical broadcast channel.

The number of time domain symbols occupied by the physical broadcast channel is determined according to a frequency point where the physical broadcast channel is located.

The number of time domain symbols occupied by the physical broadcast channel is a fixed value.

The number of time domain symbols occupied by the physical broadcast channel is determined according to a subcarrier spacing.

The number of time domain symbols occupied by the physical broadcast channel is determined according to a frequency domain bandwidth.

The number of time domain symbols occupied by the physical broadcast channel is determined according to the synchronization signal.

The number of time domain symbols occupied by the physical broadcast channel is determined according to indication information.

The number of time domain symbols occupied by the physical broadcast channel is determined according to whether the physical broadcast channel and the synchronization signal are transmitted in separate slots.

One subcarrier spacing corresponds to the number of time domain symbols; one frequency domain bandwidth corresponds to the number of time domain symbols; one size of the cyclic prefix corresponds to the number of time domain symbols; one type of the cyclic prefix corresponds to the number of time domain symbols; and one type of frequency point corresponds to the number of time domain symbols.

In this embodiment, when the PBCH is transmitted on fixed time domain symbols, the number of time domain symbols may be 2, 3, 4, 6, or 7.

In this embodiment, multiple subcarrier spacing sets may be predefined, each subcarrier spacing set includes at least one subcarrier spacing, and the number of time domain symbols corresponding to each subcarrier spacing set may be predefined. For example, when the subcarrier spacing is 15 kHz, 30 kHz, and 60 kHz, the number of time domain symbols is 3; when the subcarrier spacing is 120 kHz, 240 kHz, and 480 kHz, the number of time domain symbols is 6; when the subcarrier spacing is 15 kHz and 30 kHz, the number of time domain symbols is 4; when the subcarrier spacing is 60 kHz and 120 kHz, the number of time domain symbols is 6; and when the subcarrier spacing is 240 kHz and 480 kHz, the number of time domain symbols is 8.

In this embodiment, multiple PBCH bandwidth sets may be predefined, each PBCH bandwidth set includes at least one bandwidth, and the number of time domain symbols corresponding to each bandwidth set may be predefined. For example, when a PBCH bandwidth is 240 subcarriers, the number of time domain symbols is 3; when the PBCH bandwidth is 120 subcarriers, the number of time domain symbols is 6; when the PBCH bandwidth is less than or equal to a preset value, the number of time domain symbols is 4, and when the PBCH bandwidth is larger than a preset value, the number of time domain symbols is 8.

In this embodiment, the number of time domain symbols occupied by the PBCH may be determined according to the synchronization signal, and information of the synchronization signal according to which the number of time domain symbols occupied by the PBCH is determined is not limited here. The number of time domain symbols occupied by the physical broadcast channel may be determined according to whether the PBCH and the synchronization signal are transmitted on separate slots, and the number of time domain symbols occupied when the PBCH and another signal are collectively transmitted in one slot is different from the number of time domain symbols occupied when the PBCH is separately transmitted in one slot.

In this embodiment, the number of time domain symbols occupied by the PBCH may be determined according to dedicated indication information, and the indication information may be used for indicating the number of time domain symbols of data in the PBCH.

In an embodiment, the indication information includes at least one of the number of time domain symbols of the data, a size of information carried in the data, or a type of information carried in the data.

In this embodiment, FIG. 9 is a structural diagram of a physical broadcast channel according to an embodiment of the present application. As shown in FIG. 9, when the PBCH is transmitted using a structure of preamble + control + data, the data corresponds to the information carried in the PBCH, the control corresponds to the indication information for the data, and the indication information may include at least one of the number of time domain symbols of the data, the size of the information carried, or the type of the information carried. Alternatively, when the PBCH is transmitted using a structure of preamble + data, the data corresponds to the information carried in the PBCH, the preamble carries the indication information for the data, and the indication information includes at least one of the number of time domain symbols of the data, the size of the information carried, or the type of the information carried.

In an embodiment, the number of time domain symbols occupied by the physical broadcast channel is determined according to the synchronization signal in the manners below.

The number of time domain symbols occupied by the physical broadcast channel is determined according to the number of time domain symbols of the primary synchronization signal and/or the secondary synchronization signal.

The number of time domain symbols occupied by the physical broadcast channel is determined according to a sequence length of the primary synchronization signal and/or the secondary synchronization signal.

In this embodiment, the number of time domain symbols of the PBCH may be determined according to the number of time domain symbols of the primary synchronization signal and/or the secondary synchronization signal, or the number of time domain symbols of the PBCH may be determined according to the sequence length of the primary synchronization signal and/or the secondary synchronization signal. For example, when the number of time domain symbols of the PSS and/or the SSS is m1, the number of time domain symbols occupied by the PBCH is n1, and when the number of time domain symbols of the PSS and/or the SSS is m2, the number of time domain symbols occupied by the PBCH is n2; when the sequence length of the PSS and/or the SSS is t1, the number of time domain symbols occupied by the PBCH is n1, and when the sequence length of the PSS and/or the SSS is t2, the number of time domain symbols occupied by the PBCH is n2.

In an embodiment, when the physical broadcast channel and the synchronization signal are collectively transmitted in one slot, the number of time domain symbols occupied by the physical broadcast channel is a first value; and when the physical broadcast channel is separately transmitted in one slot, the number of time domain symbols occupied by the physical broadcast channel is a second value. The first value and the second value are different values.

In an embodiment, the number of time domain symbols occupied by the PBCH may be determined according to the length or type of the cyclic prefix. For example, the number of time domain symbols occupied by the PBCH corresponding to a first length of the cyclic prefix or a first type of the cyclic prefix is a first value, and the number of time domain symbols occupied by the PBCH corresponding to a second length of the cyclic prefix or a second type of the cyclic prefix is a second value.

In an embodiment, the number of time domain symbols occupied by the PBCH may be determined according to the frequency point where the PBCH is located. For example, the number of time domain symbols occupied by the PBCH corresponding to a first frequency point set (for example, FR1 and FR2) is a first value, and the number of time domain symbols occupied by the PBCH corresponding to a second frequency point set (for example, FR3) is a second value.

In an embodiment, the number of subcarriers corresponding to the physical broadcast channel is determined in one of the manners below.

The number of subcarriers corresponding to the physical broadcast channel is a fixed value.

The number of subcarriers corresponding to the physical broadcast channel is determined according to the number of time domain symbols occupied by the physical broadcast channel.

In this embodiment, in one manner, the number of subcarriers corresponding to the PBCH is the fixed value, where the number of subcarriers may be 96, 144, 192, 288, or 336; in the other manner, the number of subcarriers corresponding to the PBCH is determined according to the number of time domain symbols occupied by the PBCH. When the number of subcarriers is selected in the above two manner, it is ensured that the number of subcarriers occupied by the PBCH is an integer multiple of the number of subcarriers included in one resource block, and when multiple numbers of time domain symbols are present, it is ensured as much as possible that different numbers of time domain symbols correspond to the same number or similar numbers of resource elements.

In an embodiment, periodic transmissions of the physical broadcast channel are triggered by a trigger signal.

The trigger signal may trigger at least one PBCH sent periodically, the trigger signal may be a sequence or a binary amplitude-shift keying (2ASK) signal, and a position of the trigger signal may be configured in an SIB or through a predefinition.

In an embodiment, on a first time domain resource, the synchronization signal and the physical broadcast channel are transmitted on collectively occupied consecutive time domain symbols, and on a second time domain resource, the synchronization signal or the physical broadcast channel is transmitted on separately occupied consecutive time domain symbols; or on a first time domain resource, the synchronization signal and the physical broadcast channel are transmitted on collectively occupied consecutive time domain symbols, and on a second time domain resource, the synchronization signal is transmitted on separately occupied consecutive time domain symbols; or on a first time domain resource, the synchronization signal and the physical broadcast channel are transmitted on collectively occupied consecutive time domain symbols, and on a second time domain resource, the synchronization signal is transmitted on separately occupied inconsecutive time domain symbols.

FIG. 10 is a schematic diagram of transmissions of a physical broadcast channel and a synchronization signal on time domain symbols according to an embodiment of the present application. As shown by pattern 3 and pattern 4 in FIG. 10, when the PSS and the SSS are transmitted on consecutive time domain symbols, the PBCH is also transmitted on consecutive time domain symbols.

In an embodiment, the synchronization signal includes the primary synchronization signal and the secondary synchronization signal, and when the primary synchronization signal and the secondary synchronization signal are transmitted on inconsecutive time domain symbols, the physical broadcast channel is mapped in at least one of the manners below.

A time domain symbol of the physical broadcast channel is adjacent to a time domain symbol of the secondary synchronization signal, the physical broadcast channel is located before or after the secondary synchronization signal, and the physical broadcast channel does not overlap the secondary synchronization signal in the time domain.

A time domain symbol of the physical broadcast channel is adjacent to a time domain symbol of the primary synchronization signal, the physical broadcast channel is located before or after the primary synchronization signal, and the physical broadcast channel does not overlap the primary synchronization signal in the time domain.

When an interval between the primary synchronization signal and the secondary synchronization signal is one time domain symbol, the primary synchronization signal is located before the secondary synchronization signal, and the synchronization signal and the physical broadcast channel are located on a common time domain resource, the secondary synchronization signal is located at a first preset position.

When an interval between the primary synchronization signal and the secondary synchronization signal is one time domain symbol, the secondary synchronization signal is located before the primary synchronization signal, and the synchronization signal and the physical broadcast channel are located on a common time domain resource, the secondary synchronization signal is located at a second preset position, the physical broadcast channel is located on the penultimate time domain symbol on the common time domain resource, or the primary synchronization signal is located at a third preset position.

When an interval between the primary synchronization signal and the secondary synchronization signal is greater than or equal to two time domain symbols and the primary synchronization signal is located before the secondary synchronization signal, the secondary synchronization signal is located at a fourth preset position.

When an interval between the primary synchronization signal and the secondary synchronization signal is greater than or equal to two time domain symbols and the secondary synchronization signal is located before the primary synchronization signal, the secondary synchronization signal is located at a fifth preset position or the primary synchronization signal is located at a sixth preset position.

When an interval between the primary synchronization signal and the secondary synchronization signal is a preset number of time domain symbols, the physical broadcast channel is located between the primary synchronization signal and the secondary synchronization signal, the number of time domain symbols occupied by the physical broadcast channel is the preset number, and the preset number is greater than 2, where the primary synchronization signal is located on the last time domain symbol of the time domain symbols occupied by the physical broadcast channel and the secondary synchronization signal is located on the first time domain symbol of the time domain symbols occupied by the physical broadcast channel, or the primary synchronization signal is located on the first time domain symbol of the time domain symbols occupied by the physical broadcast channel and the secondary synchronization signal is located on the last time domain symbol of the time domain symbols occupied by the physical broadcast channel, or the primary synchronization signal is located on the first time domain symbol of the time domain symbols occupied by the physical broadcast channel and the secondary synchronization signal is located on the third time domain symbol or the fourth time domain symbol of the time domain symbols occupied by the physical broadcast channel.

In an embodiment, the first preset position includes the first time domain symbol or the second time domain symbol of the time domain symbols occupied by the physical broadcast channel.

The second preset position includes the last time domain symbol or the penultimate time domain symbol of the time domain symbols occupied by the physical broadcast channel.

The third preset position includes the first time domain symbol or the second time domain symbol of the time domain symbols occupied by the physical broadcast channel.

The fourth preset position includes the first time domain symbol or the third time domain symbol of the time domain symbols occupied by the physical broadcast channel.

The fifth preset position includes the last time domain symbol or the antepenultimate time domain symbol of the time domain symbols occupied by the physical broadcast channel.

The sixth preset position includes the first time domain symbol, the second time domain symbol, or the third time domain symbol of the time domain symbols occupied by the physical broadcast channel.

In this embodiment, when the PSS and the SSS are transmitted on inconsecutive time domain symbols, the PBCH may be mapped in at least one of the manners below.

The time domain symbol of the PBCH is adjacent to the time domain symbol of the SSS, the PBCH is located before or after the SSS, and the PBCH does not overlap the SSS in the time domain.

The time domain symbol of the PBCH is adjacent to the time domain symbol of the PSS, the PBCH is located before or after the PSS, and the PBCH does not overlap the PSS in the time domain.

When the interval between the PSS and the SSS is one time domain symbol, the PSS is located before the SSS, and the PSS, the SSS, and the PBCH are located on a common time domain resource, the SSS is located on the first time domain symbol of the time domain symbols occupied by the PBCH, as shown by pattern 2 in FIG. 10, or the SSS is located on the second time domain symbol of the time domain symbols occupied by the PBCH, as shown by pattern 1 in FIG. 10.

When the interval between the PSS and the SSS is one time domain symbol, the SSS is located before the PSS, and the PSS, the SSS, and the PBCH are located on a common time domain resource, the SSS is located on the last time domain symbol of the time domain symbols occupied by the PBCH, the PBCH is located on the penultimate time domain symbol on the common time domain resource, the PSS is located on the first time domain symbol of the time domain symbols occupied by the PBCH, or the PSS is located on the second time domain symbol of the time domain symbols occupied by the PBCH.

When the interval between the PSS and the SSS is two or more than two time domain symbols and the PSS is located before the SSS, the SSS is located on the first time domain symbol of the time domain symbols occupied by the PBCH, or the SSS is located on the third time domain symbol of the time domain symbols occupied by the PBCH.

When the interval between the PSS and the SSS is two or more than two time domain symbols and the SSS is located before the PSS, the SSS is located on the last time domain symbol of the time domain symbols occupied by the PBCH or the antepenultimate time domain symbol of the time domain symbols occupied by the PBCH.

When the interval between the PSS and the SSS is three or four time domain symbols, the PBCH is located between the PSS and the SSS, and the number of time domain symbols of the PBCH is 3 or 4.

The PSS is located on the first time domain symbol of the time domain symbols occupied by the PBCH and the SSS is located on the last time domain symbol of the time domain symbols occupied by the PBCH, or the SSS is located on the first time domain symbol of the time domain symbols occupied by the PBCH and the PSS is located on the last time domain symbol of the time domain symbols occupied by the PBCH; where the number of time domain symbols occupied by the PBCH may be 3, 4, 5, 6, or the like.

In an embodiment, the physical broadcast channel is transmitted using a structure of a preamble part + a data part, where the preamble part and the data part are transmitted in an amplitude-shift keying manner or in an orthogonal frequency-division multiplexing symbol manner, or the preamble part is transmitted in an amplitude-shift keying manner and the data part is transmitted in an orthogonal frequency-division multiplexing symbol manner.

In this embodiment, to reduce network overheads and better implement the network energy saving, in a 6G or future wireless system, as shown in FIG. 11 which is another structural diagram of a physical broadcast channel according to an embodiment of the present application, the structure of preamble + data may be considered to be used for implementing the function of the PSS\SSS\PBCH. The information carried in the data part includes at least one of the information carried in the PBCH, cell identity information, or frame information, and whether the data is transmitted depends on whether the preamble is transmitted or a sequence corresponding to the preamble. For example, when the preamble uses sequence 1, the data is transmitted, and when the preamble uses sequence 2, no data is transmitted. Alternatively, when the preamble is sent, the data may or may not be sent. The preamble may be sent periodically or aperiodically.

The preamble may be transmitted in an OOK (2ASK) manner or an OFDM manner.

The data may be transmitted in the OOK manner or the OFDM manner.

In an embodiment, both the preamble and the data are transmitted in the OOK manner.

In an embodiment, the preamble is transmitted in the OOK manner, the data is transmitted in the OFDM manner, and a predefined interval exists between the preamble and the data.

The terminal performs blind detection to determine whether the preamble is transmitted. When the preamble is detected, the blind detection is performed on the data, and the information carried in the data part is acquired. Alternatively, whether the data is transmitted is determined according to the sequence of the preamble detected.

In the preceding embodiments, FIG. 12 is a schematic diagram of transmissions of a physical broadcast channel, a secondary synchronization signal, and a primary synchronization signal according to an embodiment of the present application. As shown in FIG. 12, the PSS, the SSS, and the PBCH may be transmitted in the OFDM manner; the PSS may be transmitted in the OOK manner, the SSS and the PBCH may be transmitted in the OFDM manner, and the predefined interval exists between the PBCH or SSS and the PSS; or the PSS and the SSS may be transmitted in the OOK manner, the PBCH may be transmitted in the OFDM manner, and the predefined interval exists between the PBCH and the PSS or SSS. The predefined interval is determined according to a processing time of the terminal and is measured in units of time domain symbols, such as one time domain symbol, two time domain symbols, three time domain symbols, four time domain symbols, or one slot.

In another manner, the PSS is replaced with preamble + data, and the SSS and the PBCH still exist and are sent in the manner in the preceding embodiments, where the information carried in the data part may include at least one of SSS configuration information, PBCH configuration information, access control information, the frame information, or physical downlink control channel (PDCCH) configuration information. In another manner, the PSS and/or the PBCH are replaced with preamble + data, the SSS still exists and is sent in the manner in the preceding embodiments, and no PBCH is sent, where the information carried in the data part may include at least one of: the SSS configuration information, the PBCH configuration information, the access control information, the frame information, the PDCCH configuration information, frequency domain position information, access information, or a paging configuration.

A PDCCH corresponding to the PDCCH configuration information schedules a physical downlink shared channel (PDSCH) to transmit system information. The SSS configuration information includes at least one of: the period of the SSS, a time domain position, a frequency domain position, whether the SSS exists, or a time domain offset. The PDCCH configuration includes at least one of: a time domain position of the PDCCH, a size of a search space of the PDCCH, a subcarrier spacing, or a frequency domain position of the PDCCH. The access information includes information about the access resource for an access initiated by the terminal and specifically includes at least one of: time domain information of the access resource, frequency domain information of the access resource, or sequence information of the access resource. Paging configuration information includes information for waking up the terminal to access the network and/or a system message change indication. The access control information specifically includes whether the access is allowed.

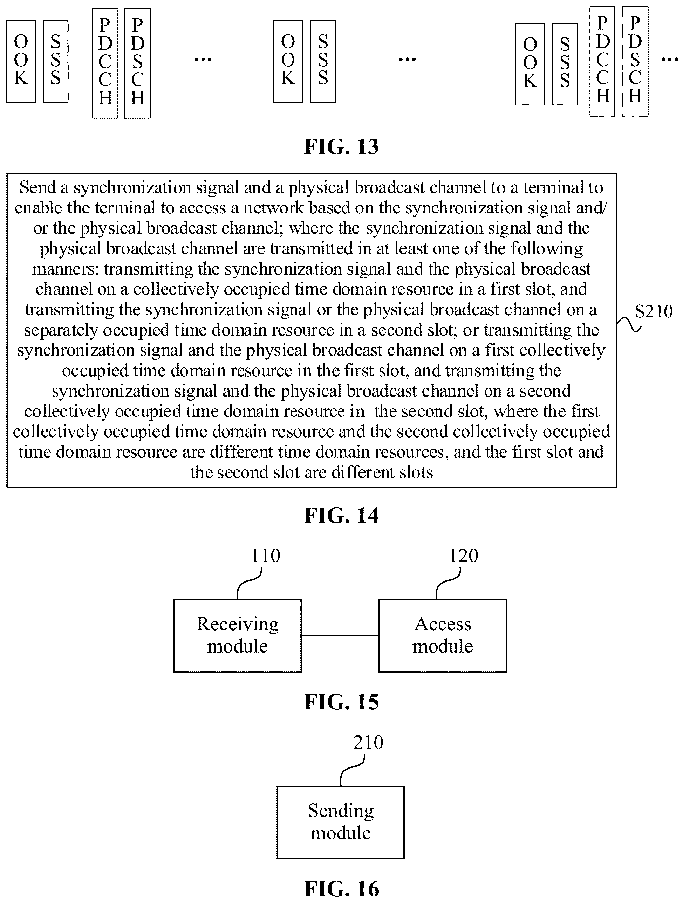

The terminal performs the blind detection to obtain the information carried in the data, detects the PDCCH on a corresponding resource according to the PDCCH configuration information carried in the data, decodes the PDSCH according to scheduling information carried in the detected PDCCH, obtains a system message carried in the PDSCH, initiates the access according to access information carried in the system message, completes an access procedure, and accesses the network. Alternatively, a data transmission is performed according to data transmission information carried in the system message. When the data carries the access information, the terminal directly initiates the access after acquiring the data, detects the PDCCH according to the PDCCH configuration information, obtains access response information sent by the network to the terminal, schedules uplink data transmission information, and completes the access process. FIG. 13 is another schematic diagram of transmissions of a physical broadcast channel, a secondary synchronization signal, and a primary synchronization signal according to an embodiment of the present application. As shown in FIG. 13, an OOK signal is the preamble (a single sequence or multiple sequences) or the preamble + data and is used for coarse synchronization, indicating whether the SSS exists, or carrying configuration information. The OOK signal may be used for at least one of coarse synchronization and cell discovery, an SSS indication, or a PBCH indication.

In an embodiment, a time domain length of the first collectively occupied time domain resource is different from a time domain length of the second collectively occupied time domain resource, or a frequency domain width of the first collectively occupied time domain resource is different from a frequency domain width of the second collectively occupied time domain resource, or a sequence of the primary synchronization signal or a sequence of the secondary synchronization signal on the first collectively occupied time domain resource is different from a sequence of the primary synchronization signal or a sequence of the secondary synchronization signal on the second collectively occupied time domain resource, or the first collectively occupied time domain resource is the same as a time domain resource collectively occupied by the synchronization signal and the physical broadcast channel in a 6G system, and the second collectively occupied time domain resource is the same as a time domain resource of the synchronization signal in a 5G system, or the relative position relationship between the synchronization signal and the physical broadcast channel on the first collectively occupied time domain resource is different from the relative position relationship between the synchronization signal and the physical broadcast channel on the second collectively occupied time domain resource, or a subcarrier spacing of the first collectively occupied time domain resource is different from a subcarrier spacing of the second collectively occupied time domain resource, or a cyclic prefix corresponding to the first collectively occupied time domain resource is different from a cyclic prefix corresponding to the second collectively occupied time domain resource, or signaling carried in the physical broadcast channel corresponding to the first collectively occupied time domain resource is different from signaling carried in the physical broadcast channel corresponding to the second collectively occupied time domain resource, or the number of information bits carried in the physical broadcast channel corresponding to the first collectively occupied time domain resource is different from the number of information bits carried in the physical broadcast channel corresponding to the second collectively occupied time domain resource.

The signaling carried in the physical broadcast channel corresponding to the first collectively occupied time domain resource specifically includes at least one of: PDCCH configuration information, radio frame information, or frequency domain position information; and the signaling carried in the physical broadcast channel corresponding to the second collectively occupied time domain resource specifically includes access resource information and/or paging configuration information.

In an embodiment, when the synchronization signal and the physical broadcast channel use a structure of the synchronization signal and the physical broadcast channel in the 5G system, at least one of: a pilot of the physical broadcast channel, a scrambling sequence of cyclic redundancy check, or a reserved bit in the physical broadcast channel indicates that a 6G network is accessed.

The reserved bit in the physical broadcast channel is a bit reserved in a 5G physical broadcast channel.

In this embodiment, the synchronization signal and the physical broadcast channel in the 6G system have multiple structures, one structure is the same as the structure of an SSB in the 5G system, and another structure is a brand-new structure, for example, the other structure has a different time-frequency position relationship, a different sequence, a different number of subcarriers, or a different number of time domain symbols from that of 5G.

When the synchronization signal and the physical broadcast channel in the 6G system use the structure of the SSB in the 5G system, the pilot of the PBCH, the scrambling sequence of cyclic redundancy check (CRC), or the reserved bit in the PBCH may indicate that the current system is the 6G system. The reserved bit in the PBCH is the bit reserved in the 5G PBCH. Additionally, if some 5G terminals are desired to be denied access to the network, a deny access command in the PBCH is set as denied, the reserved bit indicates a particular value, and other bits are redefined to indicate new functions for use of 6G or 5G-A terminals.

When the synchronization signal and the physical broadcast channel in the 6G system use a new structure, the terminal detects the synchronization signal and/or the physical broadcast channel in the blind detection manner to determine whether the current network is the 6G network.

FIG. 14 is a flowchart of another channel transmission method according to an embodiment of the present application. As shown in FIG. 14, the channel transmission method of this embodiment may be applied to a base station and includes S210.

In S210, a synchronization signal and a physical broadcast channel are sent to a terminal to enable the terminal to access a network based on the synchronization signal and/or the physical broadcast channel.

The synchronization signal and the physical broadcast channel are transmitted in at least one of the manners below.

The synchronization signal and the physical broadcast channel are transmitted on a collectively occupied time domain resource in a first slot, and the synchronization signal or the physical broadcast channel is transmitted on a separately occupied time domain resource in a second slot.

The synchronization signal and the physical broadcast channel are transmitted on a first collectively occupied time domain resource in a first slot, and the synchronization signal and the physical broadcast channel are transmitted on a second collectively occupied time domain resource in a second slot, where the first collectively occupied time domain resource and the second collectively occupied time domain resource are different time domain resources.

The first slot and the second slot are different slots.

In this embodiment, the transmission manner may include the manners below.

In manner one, the synchronization signal and the physical broadcast channel are transmitted on the collectively occupied time domain resource in the first slot, and the synchronization signal is transmitted on the separately occupied time domain resource in the second slot.

In manner two, the synchronization signal and the physical broadcast channel are transmitted on the collectively occupied time domain resource in the first slot, the synchronization signal is transmitted on the separately occupied time domain resource in the second slot, and the physical broadcast channel is transmitted on the separately occupied time domain resource in a third slot.

In manner three, the synchronization signal and the physical broadcast channel are transmitted on the first collectively occupied time domain resource in the first slot, and the synchronization signal and the physical broadcast channel are transmitted on the second collectively occupied time domain resource in the second slot.

In manner four, a primary synchronization signal, a secondary synchronization signal, and the physical broadcast channel are transmitted on the collectively occupied time domain resource in the first slot, the secondary synchronization signal and the primary synchronization signal are transmitted on the collectively occupied time domain resource in the second slot, and the primary synchronization signal or the secondary synchronization signal is transmitted on the separately occupied time domain resource in the third slot.

In manner five, the primary synchronization signal, the secondary synchronization signal, and the physical broadcast channel are transmitted on the collectively occupied time domain resource in the first slot, the secondary synchronization signal is transmitted on the separately occupied time domain resource in the second slot, and the primary synchronization signal is transmitted on the separately occupied time domain resource in the third slot.

In manner six, the primary synchronization signal, the secondary synchronization signal, and the physical broadcast channel are transmitted on the collectively occupied time domain resource in the first slot, the secondary synchronization signal and the physical broadcast channel are transmitted on the collectively occupied time domain resource in the second slot, and the primary synchronization signal or the secondary synchronization signal is transmitted on the separately occupied time domain resource in the third slot.

In manner seven, the primary synchronization signal, the secondary synchronization signal, and the physical broadcast channel are transmitted on the collectively occupied time domain resource in the first slot, the secondary synchronization signal and the physical broadcast channel are transmitted on the collectively occupied time domain resource in the second slot, and the secondary synchronization signal and the primary synchronization signal are transmitted on the collectively occupied time domain resource in the third slot.

In manner eight, the secondary synchronization signal and the physical broadcast channel are transmitted on the collectively occupied time domain resource in the first slot, and the secondary synchronization signal and the primary synchronization signal are transmitted on the collectively occupied time domain resource in the second slot.

Manner three may be used in combination with another manner. For example, manner three is combined with manner one: the synchronization signal and the physical broadcast channel are transmitted on the first collectively occupied time domain resource in the first slot, the synchronization signal and the physical broadcast channel are transmitted on the second collectively occupied time domain resource in the second slot, and the synchronization signal is transmitted on the separately occupied time domain resource in the third slot. Alternatively, manner three is combined with manner four: the synchronization signal and the physical broadcast channel are transmitted on the first collectively occupied time domain resource in the first slot, the synchronization signal and the physical broadcast channel are transmitted on the second collectively occupied time domain resource in the second slot, the primary synchronization signal and the secondary synchronization signal are transmitted on the collectively occupied time domain resource in the third slot (no PBCH is transmitted in the third slot), and the primary synchronization signal is transmitted on the separately occupied time domain resource in a fourth slot (no PBCH and no secondary synchronization signal are transmitted in the fourth slot).

In this embodiment, the synchronization signal and the physical broadcast channel are transmitted in different transmission manners, and in some slots, the physical broadcast channel or the synchronization signal may be transmitted on the separately occupied time domain resource, solving the problems of power consumption of a network and a waste of resources due to limitations of joint transmissions of the synchronization signal and the physical broadcast channel.

In an embodiment, the synchronization signal includes the primary synchronization signal and/or the secondary synchronization signal, and accordingly, transmitting the synchronization signal and the physical broadcast channel on the collectively occupied time domain resource in the first slot, and transmitting the synchronization signal or the physical broadcast channel on the separately occupied time domain resource in the second slot includes one of the manners below.

The primary synchronization signal, the secondary synchronization signal, and the physical broadcast channel are transmitted on the collectively occupied time domain resource in the first slot, and the primary synchronization signal or the secondary synchronization signal is transmitted on the separately occupied time domain resource in the second slot.

The primary synchronization signal, the secondary synchronization signal, and the physical broadcast channel are transmitted on the collectively occupied time domain resource in the first slot, and the primary synchronization signal and the secondary synchronization signal are transmitted on the collectively occupied time domain resource in the second slot.

The secondary synchronization signal and the physical broadcast channel are transmitted on the collectively occupied time domain resource in the first slot, and the secondary synchronization signal and the primary synchronization signal are transmitted on the collectively occupied time domain resource in the second slot.

The synchronization signal and the physical broadcast channel are transmitted on the collectively occupied time domain resource in the first slot, the synchronization signal is transmitted on the separately occupied time domain resource in the second slot, and the physical broadcast channel is transmitted on the separately occupied time domain resource in the third slot.

The primary synchronization signal, the secondary synchronization signal, and the physical broadcast channel are transmitted on the collectively occupied time domain resource in the first slot, the primary synchronization signal or the secondary synchronization signal is transmitted on the separately occupied time domain resource in the second slot, and the secondary synchronization signal and the primary synchronization signal are transmitted on the collectively occupied time domain resource in the third slot.

The primary synchronization signal, the secondary synchronization signal, and the physical broadcast channel are transmitted on the collectively occupied time domain resource in the first slot, the secondary synchronization signal is transmitted on the separately occupied time domain resource in the second slot, and the primary synchronization signal is transmitted on the separately occupied time domain resource in the third slot.

The primary synchronization signal, the secondary synchronization signal, and the physical broadcast channel are transmitted on the collectively occupied time domain resource in the first slot, the primary synchronization signal or the secondary synchronization signal is transmitted on the separately occupied time domain resource in the second slot, and the secondary synchronization signal and the physical broadcast channel are transmitted on the collectively occupied time domain resource in the third slot.

The primary synchronization signal, the secondary synchronization signal, and the physical broadcast channel are transmitted on the collectively occupied time domain resource in the first slot, the secondary synchronization signal and the primary synchronization signal are transmitted on the collectively occupied time domain resource in the second slot, and the secondary synchronization signal and the physical broadcast channel are transmitted on the collectively occupied time domain resource in the third slot.

In an embodiment, the synchronization signal and the physical broadcast channel are transmitted periodically.

In an embodiment, a transmission period of the synchronization signal and a transmission period of the physical broadcast channel have at least one of the relationships below.

The transmission period of the physical broadcast channel is greater than or equal to the transmission period of the synchronization signal.

The transmission period of the physical broadcast channel is greater than a transmission period of the secondary synchronization signal, and the transmission period of the secondary synchronization signal is greater than a transmission period of the primary synchronization signal.

The transmission period of the physical broadcast channel is the same as a transmission period of the secondary synchronization signal, and a transmission period of the primary synchronization signal is greater than the transmission period of the physical broadcast channel.

The transmission period of the physical broadcast channel is the same as the transmission period of the synchronization signal.

In an embodiment, whether a signal transmission and/or a channel transmission exist is determined in at least one of the manners below.

Whether transmissions of the synchronization signal and the physical broadcast channel exist is determined in a blind detection manner.

Whether the transmission of the physical broadcast channel exists is indicated through the primary synchronization signal and/or the secondary synchronization signal.

In an embodiment, whether a transmission of the physical broadcast channel exists is determined in at least one of the manners below.

Whether the transmission of the physical broadcast channel exists is determined according to the number of time domain intervals between the primary synchronization signal and the secondary synchronization signal.

Whether the transmission of the physical broadcast channel exists is determined according to a precedence relationship between the primary synchronization signal and the secondary synchronization signal.

Whether the transmission of the physical broadcast channel exists is determined according to a sequence number of the secondary synchronization signal.

In an embodiment, whether transmissions of the synchronization signal and the physical broadcast channel exist is determined in at least one of the manners below.

Whether the transmissions of the secondary synchronization signal and/or the physical broadcast channel exist is determined according to a sequence number of the primary synchronization signal.

Whether the transmissions of the secondary synchronization signal and/or the transmissions of the primary synchronization signal and/or the transmissions of the physical broadcast channel exist is indicated through a dedicated indication signal.

The dedicated indication signal may be located before a time window in FIG. 8 or at a front end of the time window, where a period and a time domain position of the time window are configured in an SIB, and the dedicated indication signal is used for indicating transmission situations of the physical broadcast channel and/or the synchronization signal within the time window; indication information is carried in a sequence corresponding to the dedicated indication signal and/or the indication information is indicated according to whether the dedicated indication signal exists.

The dedicated indication signal may be the synchronization signal or a signal generated by another sequence.

In an embodiment, the number of time domain symbols occupied by the physical broadcast channel is determined in at least one of the manners below.

The number of time domain symbols occupied by the physical broadcast channel is determined according to the length of a cyclic prefix corresponding to the physical broadcast channel.

The number of time domain symbols occupied by the physical broadcast channel is determined according to a type of a cyclic prefix corresponding to the physical broadcast channel.

The number of time domain symbols occupied by the physical broadcast channel is determined according to a frequency point where the physical broadcast channel is located. The number of time domain symbols occupied by the physical broadcast channel is a fixed value.

The number of time domain symbols occupied by the physical broadcast channel is determined according to a subcarrier spacing.

The number of time domain symbols occupied by the physical broadcast channel is determined according to a frequency domain bandwidth.

The number of time domain symbols occupied by the physical broadcast channel is determined according to the synchronization signal.

The number of time domain symbols occupied by the physical broadcast channel is determined according to indication information.

The number of time domain symbols occupied by the physical broadcast channel is determined according to whether the physical broadcast channel and the synchronization signal are transmitted in separate slots.

In an embodiment, when the physical broadcast channel and the synchronization signal are collectively transmitted in one slot, the number of time domain symbols occupied by the physical broadcast channel is a first value; and when the physical broadcast channel is separately transmitted in one slot, the number of time domain symbols occupied by the physical broadcast channel is a second value. The first value and the second value are different values.

In an embodiment, one subcarrier spacing corresponds to the number of time domain symbols; one frequency domain bandwidth corresponds to the number of time domain symbols; one size of the cyclic prefix corresponds to the number of time domain symbols; one type of the cyclic prefix corresponds to the number of time domain symbols; and one type of frequency point corresponds to the number of time domain symbols.

In an embodiment, the number of time domain symbols occupied by the physical broadcast channel is determined according to the synchronization signal in the manners below.

The number of time domain symbols occupied by the physical broadcast channel is determined according to the number of time domain symbols of the primary synchronization signal and/or the secondary synchronization signal.

The number of time domain symbols occupied by the physical broadcast channel is determined according to a sequence length of the primary synchronization signal and/or the secondary synchronization signal.

In an embodiment, the indication information includes at least one of the number of time domain symbols of data, a size of information carried in data, or a type of information carried in data.

In an embodiment, the number of subcarriers corresponding to the physical broadcast channel is determined in one of the manners below.

The number of subcarriers corresponding to the physical broadcast channel is a fixed value.

The number of subcarriers corresponding to the physical broadcast channel is determined according to the number of time domain symbols occupied by the physical broadcast channel.

In an embodiment, on a first time domain resource, the synchronization signal and the physical broadcast channel are transmitted on collectively occupied consecutive time domain symbols, and on a second time domain resource, the synchronization signal or the physical broadcast channel is transmitted on separately occupied consecutive time domain symbols; or on a first time domain resource, the synchronization signal and the physical broadcast channel are transmitted on collectively occupied consecutive time domain symbols, and on a second time domain resource, the synchronization signal is transmitted on separately occupied consecutive time domain symbols; or on a first time domain resource, the synchronization signal and the physical broadcast channel are transmitted on collectively occupied consecutive time domain symbols, and on a second time domain resource, the synchronization signal is transmitted on separately occupied inconsecutive time domain symbols.

In an embodiment, periodic transmissions of the physical broadcast channel are triggered by a trigger signal.

In an embodiment, the synchronization signal includes the primary synchronization signal and the secondary synchronization signal, and when the primary synchronization signal and the secondary synchronization signal are transmitted on inconsecutive time domain symbols, the physical broadcast channel is mapped in at least one of the manners below.

A time domain symbol of the physical broadcast channel is adjacent to a time domain symbol of the secondary synchronization signal, the physical broadcast channel is located before or after the secondary synchronization signal, and the physical broadcast channel does not overlap the secondary synchronization signal in time domain.

A time domain symbol of the physical broadcast channel is adjacent to a time domain symbol of the primary synchronization signal, the physical broadcast channel is located before or after the primary synchronization signal, and the physical broadcast channel does not overlap the primary synchronization signal in time domain.

When an interval between the primary synchronization signal and the secondary synchronization signal is one time domain symbol, the primary synchronization signal is located before the secondary synchronization signal, and the synchronization signal and the physical broadcast channel are located on a common time domain resource, the secondary synchronization signal is located at a first preset position.

When an interval between the primary synchronization signal and the secondary synchronization signal is one time domain symbol, the secondary synchronization signal is located before the primary synchronization signal, and the synchronization signal and the physical broadcast channel are located on a common time domain resource, the secondary synchronization signal is located at a second preset position, the physical broadcast channel is located on the penultimate time domain symbol on the common time domain resource, or the primary synchronization signal is located at a third preset position.

When an interval between the primary synchronization signal and the secondary synchronization signal is greater than or equal to two time domain symbols and the primary synchronization signal is located before the secondary synchronization signal, the secondary synchronization signal is located at a fourth preset position.

When an interval between the primary synchronization signal and the secondary synchronization signal is greater than or equal to two time domain symbols and the secondary synchronization signal is located before the primary synchronization signal, the secondary synchronization signal is located at a fifth preset position or the primary synchronization signal is located at a sixth preset position.

When an interval between the primary synchronization signal and the secondary synchronization signal is a preset number of time domain symbols, the physical broadcast channel is located between the primary synchronization signal and the secondary synchronization signal, the number of time domain symbols occupied by the physical broadcast channel is the preset number, and the preset number is greater than 2, where the primary synchronization signal is located on the last time domain symbol of the time domain symbols occupied by the physical broadcast channel and the secondary synchronization signal is located on the first time domain symbol of the time domain symbols occupied by the physical broadcast channel, or the primary synchronization signal is located on the first time domain symbol of the time domain symbols occupied by the physical broadcast channel and the secondary synchronization signal is located on the last time domain symbol of the time domain symbols occupied by the physical broadcast channel, or the primary synchronization signal is located on the first time domain symbol of the time domain symbols occupied by the physical broadcast channel and the secondary synchronization signal is located on the third time domain symbol or the fourth time domain symbol of the time domain symbols occupied by the physical broadcast channel.

In an embodiment, the first preset position includes the first time domain symbol or the second time domain symbol of the time domain symbols occupied by the physical broadcast channel.

The second preset position includes the last time domain symbol or the penultimate time domain symbol of the time domain symbols occupied by the physical broadcast channel.

The third preset position includes the first time domain symbol or the second time domain symbol of the time domain symbols occupied by the physical broadcast channel.

The fourth preset position includes the first time domain symbol or the third time domain symbol of the time domain symbols occupied by the physical broadcast channel.

The fifth preset position includes the last time domain symbol or the antepenultimate time domain symbol of the time domain symbols occupied by the physical broadcast channel.

The sixth preset position includes the first time domain symbol, the second time domain symbol, or the third time domain symbol of the time domain symbols occupied by the physical broadcast channel.

In an embodiment, the physical broadcast channel is transmitted using a structure of a preamble part + a data part, where the preamble part and the data part are transmitted in an amplitude-shift keying manner or in an orthogonal frequency-division multiplexing symbol manner, or the preamble part is transmitted in an amplitude-shift keying manner and the data part is transmitted in an orthogonal frequency-division multiplexing symbol manner.

In an embodiment, a time domain length of the first collectively occupied time domain resource is different from a time domain length of the second collectively occupied time domain resource, or a frequency domain width of the first collectively occupied time domain resource is different from a frequency domain width of the second collectively occupied time domain resource, or a sequence of the primary synchronization signal or a sequence of the secondary synchronization signal on the first collectively occupied time domain resource is different from a sequence of the primary synchronization signal or a sequence of the secondary synchronization signal on the second collectively occupied time domain resource, or the first collectively occupied time domain resource is the same as a time domain resource collectively occupied by the synchronization signal and the physical broadcast channel in a 6G system, and the second collectively occupied time domain resource is the same as a time domain resource of the synchronization signal in a 5G system, or a relative position relationship between the synchronization signal and the physical broadcast channel on the first collectively occupied time domain resource is different from a relative position relationship between the synchronization signal and the physical broadcast channel on the second collectively occupied time domain resource, or a subcarrier spacing of the first collectively occupied time domain resource is different from a subcarrier spacing of the second collectively occupied time domain resource, or a cyclic prefix corresponding to the first collectively occupied time domain resource is different from a cyclic prefix corresponding to the second collectively occupied time domain resource, or signaling carried in the physical broadcast channel corresponding to the first collectively occupied time domain resource is different from signaling carried in the physical broadcast channel corresponding to the second collectively occupied time domain resource, or the number of information bits carried in the physical broadcast channel corresponding to the first collectively occupied time domain resource is different from the number of information bits carried in the physical broadcast channel corresponding to the second collectively occupied time domain resource.

In an embodiment, when the synchronization signal and the physical broadcast channel use a structure of the synchronization signal and the physical broadcast channel in the 5G system, at least one of a pilot of the physical broadcast channel, a scrambling sequence of cyclic redundancy check, or a reserved bit in the physical broadcast channel indicates that a 6G network is accessed.

The reserved bit in the physical broadcast channel is a bit reserved in a 5G physical broadcast channel.

An embodiment of the present application provides a channel transmission apparatus. FIG. 15 is a structural diagram of a channel transmission apparatus according to an embodiment of the present application. As shown in FIG. 15, the channel transmission apparatus may be configured in a terminal device and includes a receiving module 110 and an access module 120.

The receiving module 110 is configured to receive a synchronization signal and a physical broadcast channel sent by a base station. The synchronization signal and the physical broadcast channel are transmitted in at least one of the following manners: transmitting the synchronization signal and the physical broadcast channel on a collectively occupied time domain resource in a first slot, and transmitting the synchronization signal or the physical broadcast channel on a separately occupied time domain resource in a second slot; or transmitting the synchronization signal and the physical broadcast channel on a first collectively occupied time domain resource in the first slot, and transmitting the synchronization signal and the physical broadcast channel on a second collectively occupied time domain resource in the second slot, where the first collectively occupied time domain resource and the second collectively occupied time domain resource are different time domain resources, and the first slot and the second slot are different slots.

The access module 120 is configured to access a network based on the synchronization signal and/or the physical broadcast channel.

With the channel transmission apparatus of this embodiment, the synchronization signal and the physical broadcast channel are transmitted in different transmission manners, and in some slots, the physical broadcast channel or the synchronization signal may be transmitted on the separately occupied time domain resource, solving the problems of power consumption of a network and a waste of resources due to limitations of joint transmissions of the synchronization signal and the physical broadcast channel.

In an embodiment, the synchronization signal includes a primary synchronization signal and/or a secondary synchronization signal, and accordingly, transmitting the synchronization signal and the physical broadcast channel on the collectively occupied time domain resource in the first slot, and transmitting the synchronization signal or the physical broadcast channel on the separately occupied time domain resource in the second slot includes one of the manners below.

The primary synchronization signal, the secondary synchronization signal, and the physical broadcast channel are transmitted on the collectively occupied time domain resource in the first slot, and the primary synchronization signal or the secondary synchronization signal is transmitted on the separately occupied time domain resource in the second slot.

The primary synchronization signal, the secondary synchronization signal, and the physical broadcast channel are transmitted on the collectively occupied time domain resource in the first slot, and the primary synchronization signal and the secondary synchronization signal are transmitted on the collectively occupied time domain resource in the second slot.

The secondary synchronization signal and the physical broadcast channel are transmitted on the collectively occupied time domain resource in the first slot, and the secondary synchronization signal and the primary synchronization signal are transmitted on the collectively occupied time domain resource in the second slot.

The synchronization signal and the physical broadcast channel are transmitted on the collectively occupied time domain resource in the first slot, the synchronization signal is transmitted on the separately occupied time domain resource in the second slot, and the physical broadcast channel is transmitted on the separately occupied time domain resource in a third slot.

The primary synchronization signal, the secondary synchronization signal, and the physical broadcast channel are transmitted on the collectively occupied time domain resource in the first slot, the primary synchronization signal or the secondary synchronization signal is transmitted on the separately occupied time domain resource in the second slot, and the secondary synchronization signal and the primary synchronization signal are transmitted on the collectively occupied time domain resource in a third slot.

The primary synchronization signal, the secondary synchronization signal, and the physical broadcast channel are transmitted on the collectively occupied time domain resource in the first slot, the secondary synchronization signal is transmitted on the separately occupied time domain resource in the second slot, and the primary synchronization signal is transmitted on the separately occupied time domain resource in a third slot.

The primary synchronization signal, the secondary synchronization signal, and the physical broadcast channel are transmitted on the collectively occupied time domain resource in the first slot, the primary synchronization signal or the secondary synchronization signal is transmitted on the separately occupied time domain resource in the second slot, and the secondary synchronization signal and the physical broadcast channel are transmitted on the collectively occupied time domain resource in a third slot.

The primary synchronization signal, the secondary synchronization signal, and the physical broadcast channel are transmitted on the collectively occupied time domain resource in the first slot, the secondary synchronization signal and the primary synchronization signal are transmitted on the collectively occupied time domain resource in the second slot, and the secondary synchronization signal and the physical broadcast channel are transmitted on the collectively occupied time domain resource in a third slot.

In an embodiment, the synchronization signal and the physical broadcast channel are transmitted periodically.

In an embodiment, a transmission period of the synchronization signal and a transmission period of the physical broadcast channel have at least one of the relationships below.

The transmission period of the physical broadcast channel is greater than or equal to the transmission period of the synchronization signal.

The transmission period of the physical broadcast channel is greater than a transmission period of the secondary synchronization signal, and the transmission period of the secondary synchronization signal is greater than a transmission period of the primary synchronization signal.

The transmission period of the physical broadcast channel is the same as a transmission period of the secondary synchronization signal, and a transmission period of the primary synchronization signal is greater than the transmission period of the physical broadcast channel.

The transmission period of the physical broadcast channel is the same as the transmission period of the synchronization signal.

In an embodiment, whether a signal transmission and/or a channel transmission exist is determined in at least one of the manners below.

Whether transmissions of the synchronization signal and the physical broadcast channel exist is determined in a blind detection manner.

Whether a transmission of the physical broadcast channel exists is indicated through the primary synchronization signal and/or the secondary synchronization signal.

In an embodiment, whether a transmission of the physical broadcast channel exists is determined in at least one of the manners below.

Whether the transmission of the physical broadcast channel exists is determined according to the number of time domain intervals between the primary synchronization signal and the secondary synchronization signal.

Whether the transmission of the physical broadcast channel exists is determined according to a precedence relationship between the primary synchronization signal and the secondary synchronization signal.

Whether the transmission of the physical broadcast channel exists is determined according to a sequence number of the secondary synchronization signal.

In an embodiment, whether transmissions of the synchronization signal and the physical broadcast channel exist is determined in at least one of the manners below.

Whether the transmissions of the secondary synchronization signal and/or the physical broadcast channel exist is determined according to a sequence number of the primary synchronization signal.

Whether the transmission of the secondary synchronization signal and/or the transmission of the primary synchronization signal and/or the transmission of the physical broadcast channel exist is indicated through a dedicated indication signal.

In an embodiment, the number of time domain symbols occupied by the physical broadcast channel is determined in at least one of the manners below.

The number of time domain symbols occupied by the physical broadcast channel is determined according to the length of a cyclic prefix corresponding to the physical broadcast channel.

The number of time domain symbols occupied by the physical broadcast channel is determined according to a type of a cyclic prefix corresponding to the physical broadcast channel.

The number of time domain symbols occupied by the physical broadcast channel is determined according to a frequency point where the physical broadcast channel is located.

The number of time domain symbols occupied by the physical broadcast channel is a fixed value.

The number of time domain symbols occupied by the physical broadcast channel is determined according to a subcarrier spacing.

The number of time domain symbols occupied by the physical broadcast channel is determined according to a frequency domain bandwidth.

The number of time domain symbols occupied by the physical broadcast channel is determined according to the synchronization signal.

The number of time domain symbols occupied by the physical broadcast channel is determined according to indication information.

The number of time domain symbols occupied by the physical broadcast channel is determined according to whether the physical broadcast channel and the synchronization signal are transmitted in separate slots.

In an embodiment, when the physical broadcast channel and the synchronization signal are collectively transmitted in one slot, the number of time domain symbols occupied by the physical broadcast channel is a first value; and when the physical broadcast channel is separately transmitted in one slot, the number of time domain symbols occupied by the physical broadcast channel is a second value; where the first value and the second value are different values.

In an embodiment, one subcarrier spacing corresponds to the number of time domain symbols; one frequency domain bandwidth corresponds to the number of time domain symbols; one size of the cyclic prefix corresponds to the number of time domain symbols; one type of the cyclic prefix corresponds to the number of time domain symbols; and one type of frequency point corresponds to the number of time domain symbols.

In an embodiment, the number of time domain symbols occupied by the physical broadcast channel is determined according to the synchronization signal in the manners below.

The number of time domain symbols occupied by the physical broadcast channel is determined according to the number of time domain symbols of the primary synchronization signal and/or the secondary synchronization signal.

The number of time domain symbols occupied by the physical broadcast channel is determined according to a sequence length of the primary synchronization signal and/or the secondary synchronization signal.

In an embodiment, the indication information includes at least one of the number of time domain symbols of data, a size of information carried in data, or a type of information carried in data.

In an embodiment, the number of subcarriers corresponding to the physical broadcast channel is determined in one of the manners below.

The number of subcarriers corresponding to the physical broadcast channel is a fixed value.

The number of subcarriers corresponding to the physical broadcast channel is determined according to the number of time domain symbols occupied by the physical broadcast channel.

In an embodiment, on a first time domain resource, the synchronization signal and the physical broadcast channel are transmitted on collectively occupied consecutive time domain symbols, and on a second time domain resource, the synchronization signal or the physical broadcast channel is transmitted on separately occupied consecutive time domain symbols; or on a first time domain resource, the synchronization signal and the physical broadcast channel are transmitted on collectively occupied consecutive time domain symbols, and on a second time domain resource, the synchronization signal is transmitted on separately occupied consecutive time domain symbols; or on a first time domain resource, the synchronization signal and the physical broadcast channel are transmitted on collectively occupied consecutive time domain symbols, and on a second time domain resource, the synchronization signal is transmitted on separately occupied inconsecutive time domain symbols.

In an embodiment, periodic transmissions of the physical broadcast channel are triggered by a trigger signal.

In an embodiment, the synchronization signal includes the primary synchronization signal and the secondary synchronization signal, and when the primary synchronization signal and the secondary synchronization signal are transmitted on inconsecutive time domain symbols, the physical broadcast channel is mapped in at least one of the manners below.

A time domain symbol of the physical broadcast channel is adjacent to a time domain symbol of the secondary synchronization signal, the physical broadcast channel is located before or after the secondary synchronization signal, and the physical broadcast channel does not overlap the secondary synchronization signal in time domain.

A time domain symbol of the physical broadcast channel is adjacent to a time domain symbol of the primary synchronization signal, the physical broadcast channel is located before or after the primary synchronization signal, and the physical broadcast channel does not overlap the primary synchronization signal in time domain.

When an interval between the primary synchronization signal and the secondary synchronization signal is one time domain symbol, the primary synchronization signal is located before the secondary synchronization signal, and the synchronization signal and the physical broadcast channel are located on a common time domain resource, the secondary synchronization signal is located at a first preset position.

When an interval between the primary synchronization signal and the secondary synchronization signal is one time domain symbol, the secondary synchronization signal is located before the primary synchronization signal, and the synchronization signal and the physical broadcast channel are located on a common time domain resource, the secondary synchronization signal is located at a second preset position, the physical broadcast channel is located on the penultimate time domain symbol on the common time domain resource, or the primary synchronization signal is located at a third preset position.

When an interval between the primary synchronization signal and the secondary synchronization signal is greater than or equal to two time domain symbols and the primary synchronization signal is located before the secondary synchronization signal, the secondary synchronization signal is located at a fourth preset position.

When an interval between the primary synchronization signal and the secondary synchronization signal is greater than or equal to two time domain symbols and the secondary synchronization signal is located before the primary synchronization signal, the secondary synchronization signal is located at a fifth preset position or the primary synchronization signal is located at a sixth preset position.

When an interval between the primary synchronization signal and the secondary synchronization signal is a preset number of time domain symbols, the physical broadcast channel is located between the primary synchronization signal and the secondary synchronization signal, the number of time domain symbols occupied by the physical broadcast channel is the preset number, and the preset number is greater than 2, where the primary synchronization signal is located on the last time domain symbol of the time domain symbols occupied by the physical broadcast channel and the secondary synchronization signal is located on the first time domain symbol of the time domain symbols occupied by the physical broadcast channel, or the primary synchronization signal is located on the first time domain symbol of the time domain symbols occupied by the physical broadcast channel and the secondary synchronization signal is located on the last time domain symbol of the time domain symbols occupied by the physical broadcast channel, or the primary synchronization signal is located on the first time domain symbol of the time domain symbols occupied by the physical broadcast channel and the secondary synchronization signal is located on the third time domain symbol or the fourth time domain symbol of the time domain symbols occupied by the physical broadcast channel.

In an embodiment, the first preset position includes the first time domain symbol or the second time domain symbol of the time domain symbols occupied by the physical broadcast channel.

The second preset position includes the last time domain symbol or the penultimate time domain symbol of the time domain symbols occupied by the physical broadcast channel.

The third preset position includes the first time domain symbol or the second time domain symbol of the time domain symbols occupied by the physical broadcast channel.

The fourth preset position includes the first time domain symbol or the third time domain symbol of the time domain symbols occupied by the physical broadcast channel.

The fifth preset position includes the last time domain symbol or the antepenultimate time domain symbol of the time domain symbols occupied by the physical broadcast channel.

The sixth preset position includes the first time domain symbol, the second time domain symbol, or the third time domain symbol of the time domain symbols occupied by the physical broadcast channel.

In an embodiment, the physical broadcast channel is transmitted using a structure of a preamble part + a data part, where the preamble part and the data part are transmitted in an amplitude-shift keying manner or in an orthogonal frequency-division multiplexing symbol manner, or the preamble part is transmitted in an amplitude-shift keying manner and the data part is transmitted in an orthogonal frequency-division multiplexing symbol manner.

In an embodiment, a time domain length of the first collectively occupied time domain resource is different from a time domain length of the second collectively occupied time domain resource, or a frequency domain width of the first collectively occupied time domain resource is different from a frequency domain width of the second collectively occupied time domain resource, or a sequence of the primary synchronization signal or a sequence of the secondary synchronization signal on the first collectively occupied time domain resource is different from a sequence of the primary synchronization signal or a sequence of the secondary synchronization signal on the second collectively occupied time domain resource, or the first collectively occupied time domain resource is the same as a time domain resource collectively occupied by the synchronization signal and the physical broadcast channel in a 6G system, and the second collectively occupied time domain resource is the same as a time domain resource of the synchronization signal in a 5G system, or a relative position relationship between the synchronization signal and the physical broadcast channel on the first collectively occupied time domain resource is different from a relative position relationship between the synchronization signal and the physical broadcast channel on the second collectively occupied time domain resource, or a subcarrier spacing of the first collectively occupied time domain resource is different from a subcarrier spacing of the second collectively occupied time domain resource, or a cyclic prefix corresponding to the first collectively occupied time domain resource is different from a cyclic prefix corresponding to the second collectively occupied time domain resource, or signaling carried in the physical broadcast channel corresponding to the first collectively occupied time domain resource is different from signaling carried in the physical broadcast channel corresponding to the second collectively occupied time domain resource, or the number of information bits carried in the physical broadcast channel corresponding to the first collectively occupied time domain resource is different from the number of information bits carried in the physical broadcast channel corresponding to the second collectively occupied time domain resource.

In an embodiment, when the synchronization signal and the physical broadcast channel use a structure of the synchronization signal and the physical broadcast channel in the 5G system, at least one of a pilot of the physical broadcast channel, a scrambling sequence of cyclic redundancy check, or a reserved bit in the physical broadcast channel indicates that a 6G network is accessed.

The reserved bit in the physical broadcast channel is a bit reserved in a 5G physical broadcast channel.

The channel transmission apparatus of this embodiment and the channel transmission method of the preceding embodiment belong to the same concept. For technical details that are not exhausted in this embodiment, reference may be made to any preceding embodiment. This embodiment has the same beneficial effects as the channel transmission method performed.

An embodiment of the present application provides a channel transmission apparatus. FIG. 16 is a structural diagram of a channel transmission apparatus according to an embodiment of the present application. As shown in FIG. 16, the channel transmission apparatus may be configured in a base station and includes a sending module 210.

The sending module 210 is configured to send a synchronization signal and a physical broadcast channel to a terminal to enable the terminal to access a network based on the synchronization signal and/or the physical broadcast channel.

The synchronization signal and the physical broadcast channel are transmitted in at least one of the manners below.

The synchronization signal and the physical broadcast channel are transmitted on a collectively occupied time domain resource in a first slot, and the synchronization signal or the physical broadcast channel is transmitted on a separately occupied time domain resource in a second slot.

The synchronization signal and the physical broadcast channel are transmitted on a first collectively occupied time domain resource in a first slot, and the synchronization signal and the physical broadcast channel are transmitted on a second collectively occupied time domain resource in a second slot. The first collectively occupied time domain resource and the second collectively occupied time domain resource are different time domain resources.

The first slot and the second slot are different slots.

With the channel transmission apparatus of this embodiment, the synchronization signal and the physical broadcast channel are transmitted in different transmission manners, and in some slots, the physical broadcast channel or the synchronization signal may be transmitted on the separately occupied time domain resource, solving the problems of power consumption of a network and a waste of resources due to limitations of joint transmissions of the synchronization signal and the physical broadcast channel.

In an embodiment, the synchronization signal includes a primary synchronization signal and/or a secondary synchronization signal, and accordingly, transmitting the synchronization signal and the physical broadcast channel on the collectively occupied time domain resource in the first slot, and transmitting the synchronization signal or the physical broadcast channel on the separately occupied time domain resource in the second slot includes one of the manners below.

The primary synchronization signal, the secondary synchronization signal, and the physical broadcast channel are transmitted on the collectively occupied time domain resource in the first slot, and the primary synchronization signal or the secondary synchronization signal is transmitted on the separately occupied time domain resource in the second slot.

The primary synchronization signal, the secondary synchronization signal, and the physical broadcast channel are transmitted on the collectively occupied time domain resource in the first slot, and the primary synchronization signal and the secondary synchronization signal are transmitted on the collectively occupied time domain resource in the second slot.

The secondary synchronization signal and the physical broadcast channel are transmitted on the collectively occupied time domain resource in the first slot, and the secondary synchronization signal and the primary synchronization signal are transmitted on the collectively occupied time domain resource in the second slot.

The synchronization signal and the physical broadcast channel are transmitted on the collectively occupied time domain resource in the first slot, the synchronization signal is transmitted on the separately occupied time domain resource in the second slot, and the physical broadcast channel is transmitted on the separately occupied time domain resource in a third slot.

The primary synchronization signal, the secondary synchronization signal, and the physical broadcast channel are transmitted on the collectively occupied time domain resource in the first slot, the primary synchronization signal or the secondary synchronization signal is transmitted on the separately occupied time domain resource in the second slot, and the secondary synchronization signal and the primary synchronization signal are transmitted on the collectively occupied time domain resource in a third slot.

The primary synchronization signal, the secondary synchronization signal, and the physical broadcast channel are transmitted on the collectively occupied time domain resource in the first slot, the secondary synchronization signal is transmitted on the separately occupied time domain resource in the second slot, and the primary synchronization signal is transmitted on the separately occupied time domain resource in a third slot.

The primary synchronization signal, the secondary synchronization signal, and the physical broadcast channel are transmitted on the collectively occupied time domain resource in the first slot, the primary synchronization signal or the secondary synchronization signal is transmitted on the separately occupied time domain resource in the second slot, and the secondary synchronization signal and the physical broadcast channel are transmitted on the collectively occupied time domain resource in a third slot.

The primary synchronization signal, the secondary synchronization signal, and the physical broadcast channel are transmitted on the collectively occupied time domain resource in the first slot, the secondary synchronization signal and the primary synchronization signal are transmitted on the collectively occupied time domain resource in the second slot, and the secondary synchronization signal and the physical broadcast channel are transmitted on the collectively occupied time domain resource in a third slot.

In an embodiment, the synchronization signal and the physical broadcast channel are transmitted periodically.

In an embodiment, a transmission period of the synchronization signal and a transmission period of the physical broadcast channel have at least one of the relationships below.

The transmission period of the physical broadcast channel is greater than or equal to the transmission period of the synchronization signal.

The transmission period of the physical broadcast channel is greater than a transmission period of the secondary synchronization signal, and the transmission period of the secondary synchronization signal is greater than a transmission period of the primary synchronization signal.

The transmission period of the physical broadcast channel is the same as a transmission period of the secondary synchronization signal, and a transmission period of the primary synchronization signal is greater than the transmission period of the physical broadcast channel.

The transmission period of the physical broadcast channel is the same as the transmission period of the synchronization signal.

In an embodiment, whether a signal transmission and/or a channel transmission exist is determined in at least one of the manners below.

Whether transmissions of the synchronization signal and the physical broadcast channel exist is determined in a blind detection manner.

Whether the transmission of the physical broadcast channel exists is indicated through the primary synchronization signal and/or the secondary synchronization signal.

In an embodiment, whether the transmission of the physical broadcast channel exists is determined in at least one of the manners below.

Whether the transmission of the physical broadcast channel exists is determined according to the number of time domain intervals between the primary synchronization signal and the secondary synchronization signal.

Whether the transmission of the physical broadcast channel exists is determined according to a precedence relationship between the primary synchronization signal and the secondary synchronization signal.

Whether the transmission of the physical broadcast channel exists is determined according to a sequence number of the secondary synchronization signal.

In an embodiment, whether the transmissions of the synchronization signal and the physical broadcast channel exist is determined in at least one of the manners below.

Whether the transmissions of the secondary synchronization signal and/or the physical broadcast channel exist is determined according to a sequence number of the primary synchronization signal.

Whether the transmissions of the secondary synchronization signal and/or the primary synchronization signal and/or the physical broadcast channel exist is indicated through a dedicated indication signal.

In an embodiment, the number of time domain symbols occupied by the physical broadcast channel is determined in at least one of the manners below.

The number of time domain symbols occupied by the physical broadcast channel is determined according to the length of a cyclic prefix corresponding to the physical broadcast channel.

The number of time domain symbols occupied by the physical broadcast channel is determined according to a type of a cyclic prefix corresponding to the physical broadcast channel.

The number of time domain symbols occupied by the physical broadcast channel is determined according to a frequency point where the physical broadcast channel is located. The number of time domain symbols occupied by the physical broadcast channel is a fixed value.

The number of time domain symbols occupied by the physical broadcast channel is determined according to a subcarrier spacing.

The number of time domain symbols occupied by the physical broadcast channel is determined according to a frequency domain bandwidth.

The number of time domain symbols occupied by the physical broadcast channel is determined according to the synchronization signal.

The number of time domain symbols occupied by the physical broadcast channel is determined according to indication information.

The number of time domain symbols occupied by the physical broadcast channel is determined according to whether the physical broadcast channel and the synchronization signal are transmitted in separate slots.

In an embodiment, when the physical broadcast channel and the synchronization signal are collectively transmitted in one slot, the number of time domain symbols occupied by the physical broadcast channel is a first value; and when the physical broadcast channel is separately transmitted in one slot, the number of time domain symbols occupied by the physical broadcast channel is a second value. The first value and the second value are different values.

In an embodiment, one subcarrier spacing corresponds to the number of time domain symbols; one frequency domain bandwidth corresponds to the number of time domain symbols; one size of the cyclic prefix corresponds to the number of time domain symbols; one type of the cyclic prefix corresponds to the number of time domain symbols; and one type of frequency point corresponds to the number of time domain symbols.

In an embodiment, the number of time domain symbols occupied by the physical broadcast channel is determined according to the synchronization signal in the manners below.

The number of time domain symbols occupied by the physical broadcast channel is determined according to the number of time domain symbols of the primary synchronization signal and/or the secondary synchronization signal.

The number of time domain symbols occupied by the physical broadcast channel is determined according to a sequence length of the primary synchronization signal and/or the secondary synchronization signal.

In an embodiment, the indication information includes at least one of: the number of time domain symbols of data, a size of information carried in data, or a type of information carried in data.

In an embodiment, the number of subcarriers corresponding to the physical broadcast channel is determined in one of the manners below.

The number of subcarriers corresponding to the physical broadcast channel is a fixed value.

The number of subcarriers corresponding to the physical broadcast channel is determined according to the number of time domain symbols occupied by the physical broadcast channel.

In an embodiment, on a first time domain resource, the synchronization signal and the physical broadcast channel are transmitted on collectively occupied consecutive time domain symbols, and on a second time domain resource, the synchronization signal or the physical broadcast channel is transmitted on separately occupied consecutive time domain symbols; or on a first time domain resource, the synchronization signal and the physical broadcast channel are transmitted on collectively occupied consecutive time domain symbols, and on a second time domain resource, the synchronization signal is transmitted on separately occupied consecutive time domain symbols; or on a first time domain resource, the synchronization signal and the physical broadcast channel are transmitted on collectively occupied consecutive time domain symbols, and on a second time domain resource, the synchronization signal is transmitted on separately occupied inconsecutive time domain symbols.

In an embodiment, periodic transmissions of the physical broadcast channel are triggered by a trigger signal.

In an embodiment, the synchronization signal includes the primary synchronization signal and the secondary synchronization signal, and when the primary synchronization signal and the secondary synchronization signal are transmitted on inconsecutive time domain symbols, the physical broadcast channel is mapped in at least one of the manners below.

A time domain symbol of the physical broadcast channel is adjacent to a time domain symbol of the secondary synchronization signal, the physical broadcast channel is located before or after the secondary synchronization signal, and the physical broadcast channel does not overlap the secondary synchronization signal in time domain.

A time domain symbol of the physical broadcast channel is adjacent to a time domain symbol of the primary synchronization signal, the physical broadcast channel is located before or after the primary synchronization signal, and the physical broadcast channel does not overlap the primary synchronization signal in time domain.

When an interval between the primary synchronization signal and the secondary synchronization signal is one time domain symbol, the primary synchronization signal is located before the secondary synchronization signal, and the synchronization signal and the physical broadcast channel are located on a common time domain resource, the secondary synchronization signal is located at a first preset position.

When an interval between the primary synchronization signal and the secondary synchronization signal is one time domain symbol, the secondary synchronization signal is located before the primary synchronization signal, and the synchronization signal and the physical broadcast channel are located on a common time domain resource, the secondary synchronization signal is located at a second preset position, the physical broadcast channel is located on the penultimate time domain symbol on the common time domain resource, or the primary synchronization signal is located at a third preset position.

When an interval between the primary synchronization signal and the secondary synchronization signal is greater than or equal to two time domain symbols and the primary synchronization signal is located before the secondary synchronization signal, the secondary synchronization signal is located at a fourth preset position.

When an interval between the primary synchronization signal and the secondary synchronization signal is greater than or equal to two time domain symbols and the secondary synchronization signal is located before the primary synchronization signal, the secondary synchronization signal is located at a fifth preset position or the primary synchronization signal is located at a sixth preset position.

When an interval between the primary synchronization signal and the secondary synchronization signal is a preset number of time domain symbols, the physical broadcast channel is located between the primary synchronization signal and the secondary synchronization signal, the number of time domain symbols occupied by the physical broadcast channel is the preset number, and the preset number is greater than 2, where the primary synchronization signal is located on the last time domain symbol of the time domain symbols occupied by the physical broadcast channel and the secondary synchronization signal is located on the first time domain symbol of the time domain symbols occupied by the physical broadcast channel, or the primary synchronization signal is located on the first time domain symbol of the time domain symbols occupied by the physical broadcast channel and the secondary synchronization signal is located on the last time domain symbol of the time domain symbols occupied by the physical broadcast channel, or the primary synchronization signal is located on the first time domain symbol of the time domain symbols occupied by the physical broadcast channel and the secondary synchronization signal is located on the third time domain symbol or the fourth time domain symbol of the time domain symbols occupied by the physical broadcast channel.

In an embodiment, the first preset position includes the first time domain symbol or the second time domain symbol of the time domain symbols occupied by the physical broadcast channel.

The second preset position includes the last time domain symbol or the penultimate time domain symbol of the time domain symbols occupied by the physical broadcast channel.

The third preset position includes the first time domain symbol or the second time domain symbol of the time domain symbols occupied by the physical broadcast channel.

The fourth preset position includes the first time domain symbol or the third time domain symbol of the time domain symbols occupied by the physical broadcast channel.

The fifth preset position includes the last time domain symbol or the antepenultimate time domain symbol of the time domain symbols occupied by the physical broadcast channel.

The sixth preset position includes the first time domain symbol, the second time domain symbol, or the third time domain symbol of the time domain symbols occupied by the physical broadcast channel.

In an embodiment, the physical broadcast channel is transmitted using a structure of a preamble part + a data part, where the preamble part and the data part are transmitted in an amplitude-shift keying manner or in an orthogonal frequency-division multiplexing symbol manner, or the preamble part is transmitted in an amplitude-shift keying manner and the data part is transmitted in an orthogonal frequency-division multiplexing symbol manner.

In an embodiment, a time domain length of the first collectively occupied time domain resource is different from a time domain length of the second collectively occupied time domain resource, or a frequency domain width of the first collectively occupied time domain resource is different from a frequency domain width of the second collectively occupied time domain resource, or a sequence of the primary synchronization signal or a sequence of the secondary synchronization signal on the first collectively occupied time domain resource is different from a sequence of the primary synchronization signal or a sequence of the secondary synchronization signal on the second collectively occupied time domain resource, or the first collectively occupied time domain resource is the same as a time domain resource collectively occupied by the synchronization signal and the physical broadcast channel in a 6G system, and the second collectively occupied time domain resource is the same as a time domain resource of the synchronization signal in a 5G system, or a relative position relationship between the synchronization signal and the physical broadcast channel on the first collectively occupied time domain resource is different from a relative position relationship between the synchronization signal and the physical broadcast channel on the second collectively occupied time domain resource, or a subcarrier spacing of the first collectively occupied time domain resource is different from a subcarrier spacing of the second collectively occupied time domain resource, or a cyclic prefix corresponding to the first collectively occupied time domain resource is different from a cyclic prefix corresponding to the second collectively occupied time domain resource, or signaling carried in the physical broadcast channel corresponding to the first collectively occupied time domain resource is different from signaling carried in the physical broadcast channel corresponding to the second collectively occupied time domain resource, or the number of information bits carried in the physical broadcast channel corresponding to the first collectively occupied time domain resource is different from the number of information bits carried in the physical broadcast channel corresponding to the second collectively occupied time domain resource.

In an embodiment, when the synchronization signal and the physical broadcast channel use a structure of the synchronization signal and the physical broadcast channel in the 5G system, at least one of a pilot of the physical broadcast channel, a scrambling sequence of cyclic redundancy check, or a reserved bit in the physical broadcast channel indicates that a 6G network is accessed.

The reserved bit in the physical broadcast channel is a bit reserved in a 5G physical broadcast channel.

The channel transmission apparatus of this embodiment and the channel transmission method of the preceding embodiment belong to the same concept. For technical details that are not exhausted in this embodiment, reference may be made to any preceding embodiment. This embodiment has the same beneficial effects as the channel transmission method performed.

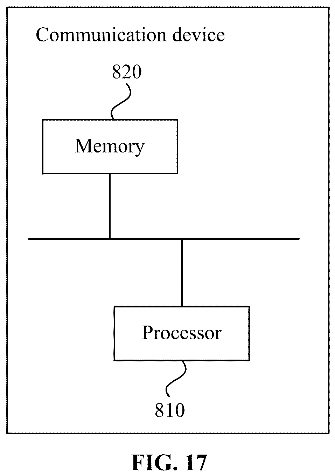

An embodiment of the present application provides a communication device. FIG. 17 is a structural diagram of a communication device according to an embodiment of the present application. As shown in FIG. 17, the device of the present application includes a processor 810 and a memory 820. One or more processors 810 may be provided in the device, with one processor 810 as an example in FIG. 17. One or more memories 820 may be provided in the device, with one memory 820 as an example in FIG. 17. The processor 810 and the memory 820 in the device may be connected via a bus or in other manners. The connection via a bus is used as an example in FIG. 17. In this embodiment, the device may be a first communication node or a second communication node.

As a computer-readable storage medium, the memory 820 may be configured to store software programs, computer-executable programs, and modules, such as program instructions/modules corresponding to the device of any embodiment of the present application (for example, the selection module 610 and the communication module 620 in the information transmission apparatus). The memory 820 may include a program storage region and a data storage region. The program storage region may store an operating system and an application program required by at least one function. The data storage region may store data created depending on use of the device. Additionally, the memory 820 may include a high-speed random-access memory and may also include a nonvolatile memory, such as at least one magnetic disk memory, a flash memory, or another nonvolatile solid-state memory. In some examples, the memory 820 may further include memories that are remotely disposed relative to the processor 810. These remote memories may be connected to the device via a network. Examples of the network include, but are not limited to, the Internet, an intranet, a local area network, a mobile communication network, and a combination thereof.

In the case where the communication device is a terminal device, the preceding device may be configured to perform the channel transmission method applied to the terminal device according to any preceding embodiment and has corresponding functions and effects.

In the case where the communication device is a base station, the preceding device may be configured to perform the channel transmission method applied to the base station according to any preceding embodiment and has corresponding functions and effects.

An embodiment of the present application provides a storage medium including computer-executable instructions which, when executed by a computer processor, cause the processor to perform an information transmission method applied to a first communication node. The method includes the following:
A synchronization signal and a physical broadcast channel sent by a base station are received, where the synchronization signal and the physical broadcast channel are transmitted in at least one of the manners below.

The synchronization signal and the physical broadcast channel are transmitted on a collectively occupied time domain resource in a first slot, and the synchronization signal or the physical broadcast channel is transmitted on a separately occupied time domain resource in a second slot.

The synchronization signal and the physical broadcast channel are transmitted on a first collectively occupied time domain resource in a first slot, and the synchronization signal and the physical broadcast channel are transmitted on a second collectively occupied time domain resource in a second slot, where the first collectively occupied time domain resource and the second collectively occupied time domain resource are different time domain resources, and the first slot and the second slot are different slots.

A network is accessed based on the synchronization signal and/or the physical broadcast channel.

An embodiment of the present application provides a storage medium including computer-executable instructions which, when executed by a computer processor, cause the processor to perform an information transmission method applied to a second communication node. The method includes sending a synchronization signal and a physical broadcast channel to a terminal to enable the terminal to access a network based on the synchronization signal and/or the physical broadcast channel; where the synchronization signal and the physical broadcast channel are transmitted in at least one of the manners below.

A synchronization signal and a physical broadcast channel are sent to a terminal to enable the terminal to access a network based on the synchronization signal and/or the physical broadcast channel.

The synchronization signal and the physical broadcast channel are transmitted in at least one of the manners below.

The synchronization signal and the physical broadcast channel are transmitted on a collectively occupied time domain resource in a first slot, and the synchronization signal or the physical broadcast channel is transmitted on a separately occupied time domain resource in a second slot.

The synchronization signal and the physical broadcast channel are transmitted on a first collectively occupied time domain resource in a first slot, and the synchronization signal and the physical broadcast channel are transmitted on a second collectively occupied time domain resource in a second slot, where the first collectively occupied time domain resource and the second collectively occupied time domain resource are different time domain resources.

The first slot and the second slot are different slots. It is to be understood by those skilled in the art that the term "user equipment" encompasses any suitable type of wireless user equipment, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A channel transmission method, which is applied to a terminal device, comprising:
receiving a synchronization signal and a physical broadcast channel sent by a base station, wherein the synchronization signal and the physical broadcast channel are transmitted in at least one of the following manners:
transmitting the synchronization signal and the physical broadcast channel on a collectively occupied time domain resource in a first slot, and transmitting the synchronization signal or the physical broadcast channel on a separately occupied time domain resource in a second slot; or
transmitting the synchronization signal and the physical broadcast channel on a first collectively occupied time domain resource in the first slot, and transmitting the synchronization signal and the physical broadcast channel on a second collectively occupied time domain resource in the second slot, wherein the first collectively occupied time domain resource and the second collectively occupied time domain resource are different time domain resources, and the first slot and the second slot are different slots; and
accessing a network based on the synchronization signal and/or the physical broadcast channel.

2. The channel transmission method of claim 1, wherein the synchronization signal comprises at least one of: a primary synchronization signal or a secondary synchronization signal, and transmitting the synchronization signal and the physical broadcast channel on the collectively occupied time domain resource in the first slot, and transmitting the synchronization signal or the physical broadcast channel on the separately occupied time domain resource in the second slot comprises one of the following manners:
transmitting the primary synchronization signal, the secondary synchronization signal, and the physical broadcast channel on the collectively occupied time domain resource in the first slot, and transmitting the primary synchronization signal or the secondary synchronization signal on the separately occupied time domain resource in the second slot;
transmitting the primary synchronization signal, the secondary synchronization signal, and the physical broadcast channel on the collectively occupied time domain resource in the first slot, and transmitting the primary synchronization signal and the secondary synchronization signal on the collectively occupied time domain resource in the second slot;
transmitting the secondary synchronization signal and the physical broadcast channel on the collectively occupied time domain resource in the first slot, and transmitting the secondary synchronization signal and the primary synchronization signal on the collectively occupied time domain resource in the second slot;
transmitting the synchronization signal and the physical broadcast channel on the collectively occupied time domain resource in the first slot, transmitting the synchronization signal on the separately occupied time domain resource in the second slot, and transmitting the physical broadcast channel on the separately occupied time domain resource in a third slot;
transmitting the primary synchronization signal, the secondary synchronization signal, and the physical broadcast channel on the collectively occupied time domain resource in the first slot, transmitting the primary synchronization signal or the secondary synchronization signal on the separately occupied time domain resource in the second slot, and transmitting the secondary synchronization signal and the primary synchronization signal on the collectively occupied time domain resource in a third slot;
transmitting the primary synchronization signal, the secondary synchronization signal, and the physical broadcast channel on the collectively occupied time domain resource in the first slot, transmitting the secondary synchronization signal on the separately occupied time domain resource in the second slot, and transmitting the primary synchronization signal on the separately occupied time domain resource in a third slot;
transmitting the primary synchronization signal, the secondary synchronization signal, and the physical broadcast channel on the collectively occupied time domain resource in the first slot, transmitting the primary synchronization signal or the secondary synchronization signal on the separately occupied time domain resource in the second slot, and transmitting the secondary synchronization signal and the physical broadcast channel on the collectively occupied time domain resource in a third slot; or
transmitting the primary synchronization signal, the secondary synchronization signal, and the physical broadcast channel on the collectively occupied time domain resource in the first slot, transmitting the secondary synchronization signal and the primary synchronization signal on the collectively occupied time domain resource in the second slot, and transmitting the secondary synchronization signal and the physical broadcast channel on the collectively occupied time domain resource in a third slot.

3. The channel transmission method of claim 1 or 2, wherein the synchronization signal and the physical broadcast channel are transmitted periodically.

4. The channel transmission method of claim 3, wherein a transmission period of the synchronization signal and a transmission period of the physical broadcast channel have at least one of the following relationships:
the transmission period of the physical broadcast channel is greater than or equal to the transmission period of the synchronization signal;
the transmission period of the physical broadcast channel is greater than a transmission period of the secondary synchronization signal, and the transmission period of the secondary synchronization signal is greater than a transmission period of the primary synchronization signal;
the transmission period of the physical broadcast channel is the same as the transmission period of the secondary synchronization signal, and the transmission period of the primary synchronization signal is greater than the transmission period of the physical broadcast channel; or
the transmission period of the physical broadcast channel is the same as the transmission period of the synchronization signal.

5. The channel transmission method of claim 1 or 2, wherein whether a signal transmission and/or a channel transmission exist is determined in at least one of the following manners:
whether transmissions of the synchronization signal and the physical broadcast channel exist is determined in a blind detection manner; or
whether a transmission of the physical broadcast channel exists is indicated through the primary synchronization signal and/or the secondary synchronization signal.

6. The channel transmission method of claim 1 or 2, wherein whether a transmission of the physical broadcast channel exists is determined in at least one of the following manners:
whether the transmission of the physical broadcast channel exists is determined according to the number of time domain intervals between the primary synchronization signal and the secondary synchronization signal;
whether the transmission of the physical broadcast channel exists is determined according to a precedence relationship between the primary synchronization signal and the secondary synchronization signal; or
whether the transmission of the physical broadcast channel exists is determined according to a sequence number of the secondary synchronization signal.

7. The channel transmission method of claim 1 or 2, wherein whether transmissions of the synchronization signal and/or the physical broadcast channel exist is determined in at least one of the following manners:
whether transmissions of the secondary synchronization signal and/or the physical broadcast channel exist is determined according to a sequence number of the primary synchronization signal; or
whether at least one of a transmission of the secondary synchronization signal, a transmission of the primary synchronization signal, or a transmission of the physical broadcast channel exists is indicated through a dedicated indication signal.

8. The channel transmission method of claim 1 or 2, wherein the number of time domain symbols occupied by the physical broadcast channel is determined in at least one of the following manners:
the number of time domain symbols occupied by the physical broadcast channel is a fixed value;
the number of time domain symbols occupied by the physical broadcast channel is determined according to a subcarrier spacing;
the number of time domain symbols occupied by the physical broadcast channel is determined according to a frequency domain bandwidth;
the number of time domain symbols occupied by the physical broadcast channel is determined according to the synchronization signal;
the number of time domain symbols occupied by the physical broadcast channel is determined according to indication information;
the number of time domain symbols occupied by the physical broadcast channel is determined according to whether the physical broadcast channel and the synchronization signal are transmitted in separate slots;
the number of time domain symbols occupied by the physical broadcast channel is determined according to a length of a cyclic prefix corresponding to the physical broadcast channel;
the number of time domain symbols occupied by the physical broadcast channel is determined according to a type of the cyclic prefix corresponding to the physical broadcast channel; or
the number of time domain symbols occupied by the physical broadcast channel is determined according to a frequency point where the physical broadcast channel is located.

9. The channel transmission method of claim 8, wherein
when the physical broadcast channel and the synchronization signal are collectively transmitted in one slot, the number of time domain symbols occupied by the physical broadcast channel is a first value; and
when the physical broadcast channel is separately transmitted in one slot, the number of time domain symbols occupied by the physical broadcast channel is a second value, wherein the first value and the second value are different values.

10. The channel transmission method of claim 8, wherein
one subcarrier spacing corresponds to the number of time domain symbols;
one frequency domain bandwidth corresponds to the number of time domain symbols;
one size of the cyclic prefix corresponds to the number of time domain symbols;
one type of the cyclic prefix corresponds to the number of time domain symbols; and
one type of frequency point corresponds to the number of time domain symbols.

11. The channel transmission method of claim 6, wherein the number of time domain symbols occupied by the physical broadcast channel is determined according to the synchronization signal in one of the following manners:
the number of time domain symbols occupied by the physical broadcast channel is determined according to the number of time domain symbols of the primary synchronization signal and/or the secondary synchronization signal; or
the number of time domain symbols occupied by the physical broadcast channel is determined according to a sequence length of the primary synchronization signal and/or the secondary synchronization signal.

12. The channel transmission method of claim 8, wherein the indication information comprises at least one of:
the number of time domain symbols of data, a size of information carried in data, or a type of information carried in data.

13. The channel transmission method of claim 1 or 2, wherein the number of subcarriers corresponding to the physical broadcast channel is determined in one of the following manners:
the number of subcarriers corresponding to the physical broadcast channel is a fixed value; or
the number of subcarriers corresponding to the physical broadcast channel is determined according to the number of time domain symbols occupied by the physical broadcast channel.

14. The channel transmission method of claim 1 or 2, wherein
on a first time domain resource, the synchronization signal and the physical broadcast channel are transmitted on collectively occupied consecutive time domain symbols, and on a second time domain resource, the synchronization signal or the physical broadcast channel is transmitted on separately occupied consecutive time domain symbols; or
on a first time domain resource, the synchronization signal and the physical broadcast channel are transmitted on collectively occupied consecutive time domain symbols, and on a second time domain resource, the synchronization signal is transmitted on separately occupied consecutive time domain symbols; or
on a first time domain resource, the synchronization signal and the physical broadcast channel are transmitted on collectively occupied consecutive time domain symbols, and on a second time domain resource, the synchronization signal is transmitted on separately occupied inconsecutive time domain symbols.

15. The channel transmission method of claim 1 or 2, wherein periodic transmissions of the physical broadcast channel are triggered by a trigger signal.

16. The channel transmission method of claim 1 or 2, wherein the synchronization signal comprises the primary synchronization signal and the secondary synchronization signal, and when the primary synchronization signal and the secondary synchronization signal are transmitted on inconsecutive time domain symbols, the physical broadcast channel is mapped in at least one of the following manners:
a time domain symbol of the physical broadcast channel is adjacent to a time domain symbol of the secondary synchronization signal, the physical broadcast channel is located before or after the secondary synchronization signal, and the physical broadcast channel does not overlap the secondary synchronization signal in time domain;
the time domain symbol of the physical broadcast channel is adjacent to a time domain symbol of the primary synchronization signal, the physical broadcast channel is located before or after the primary synchronization signal, and the physical broadcast channel does not overlap the primary synchronization signal in time domain;
when an interval between the primary synchronization signal and the secondary synchronization signal is one time domain symbol, the primary synchronization signal is located before the secondary synchronization signal, and the synchronization signal and the physical broadcast channel are located on a common time domain resource, the secondary synchronization signal is located at a first preset position;
when the interval between the primary synchronization signal and the secondary synchronization signal is one time domain symbol, the secondary synchronization signal is located before the primary synchronization signal, and the synchronization signal and the physical broadcast channel are located on a common time domain resource, the secondary synchronization signal is located at a second preset position, the physical broadcast channel is located on a penultimate time domain symbol on the common time domain resource, or the primary synchronization signal is located at a third preset position;
when the interval between the primary synchronization signal and the secondary synchronization signal is greater than or equal to two time domain symbols and the primary synchronization signal is located before the secondary synchronization signal, the secondary synchronization signal is located at a fourth preset position;
when the interval between the primary synchronization signal and the secondary synchronization signal is greater than or equal to two time domain symbols and the secondary synchronization signal is located before the primary synchronization signal, the secondary synchronization signal is located at a fifth preset position or the primary synchronization signal is located at a sixth preset position; or
when the interval between the primary synchronization signal and the secondary synchronization signal is a preset number of time domain symbols, the physical broadcast channel is located between the primary synchronization signal and the secondary synchronization signal, the number of time domain symbols occupied by the physical broadcast channel is the preset number, and the preset number is greater than 2, wherein the primary synchronization signal is located on a last time domain symbol of the time domain symbols occupied by the physical broadcast channel and the secondary synchronization signal is located on a first time domain symbol of the time domain symbols occupied by the physical broadcast channel, or the primary synchronization signal is located on a first time domain symbol of the time domain symbols occupied by the physical broadcast channel and the secondary synchronization signal is located on a last time domain symbol of the time domain symbols occupied by the physical broadcast channel, or the primary synchronization signal is located on a first time domain symbol of the time domain symbols occupied by the physical broadcast channel and the secondary synchronization signal is located on a third time domain symbol or a fourth time domain symbol of the time domain symbols occupied by the physical broadcast channel.

17. The channel transmission method of claim 16, wherein
the first preset position comprises the first time domain symbol or a second time domain symbol of the time domain symbols occupied by the physical broadcast channel;
the second preset position comprises the last time domain symbol or a penultimate time domain symbol of the time domain symbols occupied by the physical broadcast channel;
the third preset position comprises the first time domain symbol or the second time domain symbol of the time domain symbols occupied by the physical broadcast channel;
the fourth preset position comprises the first time domain symbol or the third time domain symbol of the time domain symbols occupied by the physical broadcast channel;
the fifth preset position comprises the last time domain symbol or an antepenultimate time domain symbol of the time domain symbols occupied by the physical broadcast channel; and
the sixth preset position comprises the first time domain symbol, the second time domain symbol, or the third time domain symbol of the time domain symbols occupied by the physical broadcast channel.

18. The channel transmission method of claim 1 or 2, wherein the physical broadcast channel is transmitted using a structure of a preamble part plus a data part, wherein the preamble part and the data part are transmitted in an amplitude-shift keying manner or in an orthogonal frequency-division multiplexing symbol manner, or the preamble part is transmitted in an amplitude-shift keying manner and the data part is transmitted in an orthogonal frequency-division multiplexing symbol manner.

19. The channel transmission method of claim 1 or 2, wherein
a time domain length of the first collectively occupied time domain resource is different from a time domain length of the second collectively occupied time domain resource, or
a frequency domain width of the first collectively occupied time domain resource is different from a frequency domain width of the second collectively occupied time domain resource, or
a sequence of the primary synchronization signal or a sequence of the secondary synchronization signal on the first collectively occupied time domain resource is different from a sequence of the primary synchronization signal or a sequence of the secondary synchronization signal on the second collectively occupied time domain resource, or
the first collectively occupied time domain resource is the same as a time domain resource collectively occupied by the synchronization signal and the physical broadcast channel in a 6G system, and the second collectively occupied time domain resource is the same as a time domain resource of the synchronization signal in a 5G system, or
a relative position relationship between the synchronization signal and the physical broadcast channel on the first collectively occupied time domain resource is different from a relative position relationship between the synchronization signal and the physical broadcast channel on the second collectively occupied time domain resource, or
a subcarrier spacing of the first collectively occupied time domain resource is different from a subcarrier spacing of the second collectively occupied time domain resource, or
a cyclic prefix corresponding to the first collectively occupied time domain resource is different from a cyclic prefix corresponding to the second collectively occupied time domain resource, or
signaling carried in the physical broadcast channel corresponding to the first collectively occupied time domain resource is different from signaling carried in the physical broadcast channel corresponding to the second collectively occupied time domain resource, or
the number of information bits carried in the physical broadcast channel corresponding to the first collectively occupied time domain resource is different from the number of information bits carried in the physical broadcast channel corresponding to the second collectively occupied time domain resource.

20. The channel transmission method of claim 1 or 2, wherein
when the synchronization signal and the physical broadcast channel use a structure of the synchronization signal and the physical broadcast channel in a 5G system, at least one of a pilot of the physical broadcast channel, a scrambling sequence of cyclic redundancy check, or a reserved bit in the physical broadcast channel indicates that a 6G network is accessed;
wherein the reserved bit in the physical broadcast channel is a bit reserved in a 5G physical broadcast channel.

21. A channel transmission method, which is applied to a base station, comprising:
sending a synchronization signal and a physical broadcast channel to a terminal to enable the terminal to access a network based on the synchronization signal and/or the physical broadcast channel;
wherein the synchronization signal and the physical broadcast channel are transmitted in at least one of the following manners:
transmitting the synchronization signal and the physical broadcast channel on a collectively occupied time domain resource in a first slot, and transmitting the synchronization signal or the physical broadcast channel on a separately occupied time domain resource in a second slot; or
transmitting the synchronization signal and the physical broadcast channel on a first collectively occupied time domain resource in the first slot, and transmitting the synchronization signal and the physical broadcast channel on a second collectively occupied time domain resource in the second slot, wherein the first collectively occupied time domain resource and the second collectively occupied time domain resource are different time domain resources, and the first slot and the second slot are different slots.

22. The channel transmission method of claim 21, wherein the synchronization signal comprises a primary synchronization signal and/or a secondary synchronization signal, and transmitting the synchronization signal and the physical broadcast channel on the collectively occupied time domain resource in the first slot, and transmitting the synchronization signal or the physical broadcast channel on the separately occupied time domain resource in the second slot comprises one of the following manners:
transmitting the primary synchronization signal, the secondary synchronization signal, and the physical broadcast channel on the collectively occupied time domain resource in the first slot, and transmitting the primary synchronization signal or the secondary synchronization signal on the separately occupied time domain resource in the second slot;
transmitting the primary synchronization signal, the secondary synchronization signal, and the physical broadcast channel on the collectively occupied time domain resource in the first slot, and transmitting the primary synchronization signal and the secondary synchronization signal on the collectively occupied time domain resource in the second slot;
transmitting the secondary synchronization signal and the physical broadcast channel on the collectively occupied time domain resource in the first slot, and transmitting the secondary synchronization signal and the primary synchronization signal on the collectively occupied time domain resource in the second slot;
transmitting the synchronization signal and the physical broadcast channel on the collectively occupied time domain resource in the first slot, transmitting the synchronization signal on the separately occupied time domain resource in the second slot, and transmitting the physical broadcast channel on the separately occupied time domain resource in a third slot;
transmitting the primary synchronization signal, the secondary synchronization signal, and the physical broadcast channel on the collectively occupied time domain resource in the first slot, transmitting the secondary synchronization signal and the primary synchronization signal on the collectively occupied time domain resource in the second slot, and transmitting the primary synchronization signal or the secondary synchronization signal on the separately occupied time domain resource in a third slot;
transmitting the primary synchronization signal, the secondary synchronization signal, and the physical broadcast channel on the collectively occupied time domain resource in the first slot, transmitting the secondary synchronization signal on the separately occupied time domain resource in the second slot, and transmitting the primary synchronization signal on the separately occupied time domain resource in a third slot;
transmitting the primary synchronization signal, the secondary synchronization signal, and the physical broadcast channel on the collectively occupied time domain resource in the first slot, transmitting the secondary synchronization signal and the physical broadcast channel on the collectively occupied time domain resource in the second slot, and transmitting the primary synchronization signal or the secondary synchronization signal on the separately occupied time domain resource in a third slot; or
transmitting the primary synchronization signal, the secondary synchronization signal, and the physical broadcast channel on the collectively occupied time domain resource in the first slot, transmitting the secondary synchronization signal and the physical broadcast channel on the collectively occupied time domain resource in the second slot, and transmitting the secondary synchronization signal and the primary synchronization signal on the collectively occupied time domain resource in a third slot.

23. A communication device, comprising a memory and at least one processor;
wherein the memory is configured to store at least one program; and
the at least one program, when executed by the at least one processor, causes the at least one processor to perform the channel transmission method of any one of claims 1 to 20 or the channel transmission method of claim 21 or 22.

24. A storage medium having a computer program stored thereon, wherein the computer program, when executed by a processor, causes the processor to perform the channel transmission method of any one of claims 1 to 20 or the channel transmission method of claim 21 or 22.
